(19) Europäisches Patentamt / European Patent Office / Office européen des brevets

(11) EP 4 493 606 B1

(12) EUROPEAN PATENT SPECIFICATION

(45) Date of publication and mention of the grant of the patent:
**05.11.2025 Bulletin 2025/45**

(21) Application number: **24728605.7**

(22) Date of filing: **22.05.2024**

(51) International Patent Classification (IPC):
***D21H 17/34*** (2006.01) ***D21H 21/10*** (2006.01)
***D21H 21/20*** (2006.01) ***C08F 265/10*** (2006.01)

(52) Cooperative Patent Classification (CPC):
(C-Sets available)
**D21H 17/34; C08F 265/10; D21H 21/10; D21H 21/20** (Cont.)

(86) International application number:
**PCT/EP2024/064129**

(87) International publication number:
**WO 2024/240837 (28.11.2024 Gazette 2024/48)**

(54) **POLYMER AND ITS METHOD OF PREPARATION**

POLYMER UND VERFAHREN ZU SEINER HERSTELLUNG

POLYMÈRE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.05.2023 FR 2305149**

(43) Date of publication of application:
**22.01.2025 Bulletin 2025/04**

(73) Proprietor: **SNF Group**
**42160 Andrézieux-Bouthéon (FR)**

(72) Inventors:
- **FAUCHER, Gatien**
  **42160 Andrézieux-Bouthéon (FR)**
- **FOUGEROUSE, Damien**
  **42160 Andrézieux-Bouthéon (FR)**
- **BARRIERE, Cyril**
  **42160 Andrézieux-Bouthéon (FR)**
- **MARTEL, Bastien**
  **42160 Andrézieux-Bouthéon (FR)**
- **PERUCHON, Quentin**
  **42160 Andrézieux-Bouthéon (FR)**

(74) Representative: **Ipsilon**
**Le Contemporain**
**50 Chemin de la Bruyère**
**69574 Dardilly Cedex (FR)**

(56) References cited:
**EP-A1- 3 722 330**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 265/10, C08F 220/54, C08F 226/02, C08F 220/585;**
**C08F 265/10, C08F 220/54, C08F 226/02, C08F 226/04, C08F 220/585**

## Description

### Technical Field of the Invention

This invention relates to a new water-soluble polymer, its method of preparation and its use, in particular for applications in the field of paper.

### Prior Art

During the manufacture of paper, cellulosic fibers as well as mineral fillers are placed in aqueous suspension before being deposited on a forming fabric so as to eliminate the water and form a mat of wet fibers which will be pressed and dried to produce a sheet of paper.

The retention of these fibers and fillers is an important parameter to recover as much material as possible on the forming fabric and limiting their passage through the forming fabric.

Furthermore, the dewatering capacity of the fibrous mat is also a major factor in papermaking methods, since an increase in dewatering capacity not only increases the speed of the paper machine, and therefore its productivity, but also reduces the energy required to dry the paper or cardboard sheet. In the laboratory, a distinction can be made between gravity dewatering and vacuum dewatering, the latter offering a better simulation of suction boxes. The faster the machines, the more important this parameter becomes.

On the other hand, we are also looking for papers and boards that are increasingly resilient, notably for the packaging and fabric industries. Increasing the mechanical strength of the paper sheet, assessed in dry or wet condition depending on the paper industry segment concerned, makes it possible to offer a higher quality paper. These include resistance to bursting, compression, delamination, and tensile strength in dry or wet condition.

As the paper industry is constantly seeking to improve its paper, board, and analogs, particularly with regard to cost reduction, yield, productivity, or even end-product properties, various polymers are used to treat the pulp to improve, for example, retention and drainage, and to improve physical properties such as dry and wet strength of the final paper product.

Polyvinyl amines (PVAm) are known and widely used in these processes, in particular to improve drainage during paper sheet formation and dry strength. Not only do these polymers give better application performances, but they also help increasing paper machine speed and thus productivity.

PVAm is prepared by polymerization of N-vinylformamide followed by hydrolysis of some or all of the formamide groups to amines. By controlling the hydrolysis reaction, the percentage of monomers with an amine function can be controlled, enabling the properties provided by this polymer to be modulated according to needs and applications.

US 4,421,602 uses partially hydrolyzed polymers of N-vinylformamide as a drainage aid in papermaking. From 10 to 90% of the formyl groups are hydrolyzed to amine units using an acid or base process during the manufacture of this polymer.

EP 3 722 330 discloses an additive based on (co)polymers resulting from the reaction between a dialdehyde compound and a complex (co)polymer.

PVAms often require a high molecular weight in order to develop satisfactory properties for high-performance applications. Low to medium molecular weight PVAms are generally prepared by solution polymerization. However, high-molecular-weight PVAm is difficult to produce by solution polymerization, as the PVAm obtained under these conditions are gels that are difficult to handle. Furthermore, problems related to high solution viscosity and poor heat transfer make this synthesis difficult on an industrial scale.

The following documents propose a method of inverse emulsion preparation, enabling higher molecular weights to be obtained than with solution polymerization, while avoiding the problems associated with increased viscosity: US2982749, US3278506, US3284393, US3957739, US3975341, US4078133, and US4312969. However, the use of oil is not recommended during papermaking, as it can lead to maintenance problems, and can affect the performance of the final paper.

The Applicant has discovered, surprisingly, that the synthesis of a polymer according to the method of the invention makes it possible to obtain polymers which, at equivalent molecular weight, have a lower viscosity. Obtaining polymers with reduced viscosity allows a reduction in the energy required during their pumping at the time of their use as well as reducing the amount of water necessary for their dilution. The polymers obtained using the method described in this invention offer performances at least equivalent to polymers obtained using a traditional process, or even improved performances in terms of dry strength, while at the same time improving drainage, thus enabling an increase in the speed of the paper machine and thus an improvement in productivity.

The use of polymers resulting from the invention is in line with the principle of environmental awareness and the impact of industry and mankind on the planet. The energy and water required to use these polymers are reduced, which in turn reduces the amount of greenhouse gas emissions such as $CO_2$ associated with their use.

**Disclosure of the Invention**

This invention relates to a water-soluble polymer comprising:

- at least one monomer A obtained by partial or total hydrolysis of the amide group -N($R^2$)-CO-$R^1$ of a monomer of formula (AP):

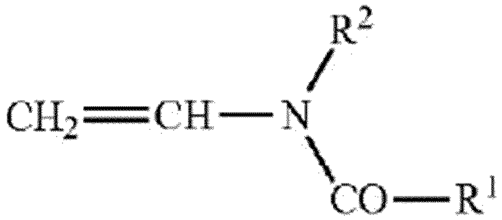

(AP)

where $R^1$ and $R^2$ are, independently, a hydrogen atom or an alkyl chain of 1 to 6 carbons,
- at least one structuring system comprising:

  (i) at least one compound I chosen from: allylsulfonic acid, methallylsulfonic acid, allyl disulfonic acid, methallyl disulfonic acid, their salts, and mixtures thereof;
  (ii) at least one compound II of formula (II):

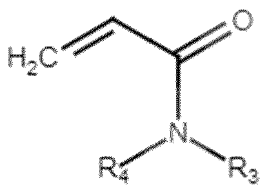

(II)

  $R_3$ and $R_4$ being, independently from one another, a hydrogen atom, a methyl group, an ethyl group, an isopropyl group, or a $CH_2$-OH group;
  $R_3$ and $R_4$ are not both a hydrogen atom ($R_3 \neq H$ when $R_4=H$; $R_4 \neq H$ when $R_3=H$),

- optionally at least one hydrophilic cationic monomer B distinct from monomer A,
- optionally at least one monomer C chosen from hydrophilic anionic monomers distinct from compound I, hydrophilic nonionic monomers distinct from the monomer of formula (AP) and compound II, hydrophilic zwitterionic monomers and hydrophobic monomers.

This water-soluble polymer is obtained according to the following steps:

a) formation of a solution (S1) comprising at least a first fraction (F1) containing (1) at least one monomer of formula (AP) and/or at least one of optional monomers B and C and (2) at least one compound chosen from compounds I and II;
b) polymerization 1 (PO1) of fraction F1 to form a solution of a first prepolymer (PP1);
c) addition, to the solution comprising PP1, of a second fraction (F2) containing (1) at least one monomer of formula (AP) and/or at least one of the optional monomers B and C and (2) at least one compound chosen from compounds I and II;
d) polymerization 2 (PO2) of fraction F2 on PP1 to form a second prepolymer (PP2);
e) addition, to the solution comprising PP2, of a third fraction (F3) containing (1) at least one monomer of formula (AP) and/or at least one of the optional monomers B and C and (2) at least one compound chosen from compounds I and II;
f) polymerization 3 (PO3) of fraction F3 on PP2 to form a solution comprising a base polymer;
g) partial or total hydrolysis of the amide group -N($R^2$)-CO-$R^1$ of the monomer of formula (AP) of the base polymer in order to obtain the water-soluble polymer;

at least one of the fractions F1, F2 or F3 contains at least one monomer of formula (AP), at least one of the fractions F1, F2 or F3 contains at least one compound I and at least one of the fractions F1, F2 or F3 contains at least one compound II.

This invention also relates to the method for preparing this water-soluble polymer.

This invention also relates to a paper or cardboard manufacturing method using this water-soluble polymer.

This invention also relates to the use of this water-soluble polymer in the recovery of hydrocarbons (oil and/or gas); in the drilling or cementing of wells (particularly hydrocarbon wells); in the stimulation of hydrocarbon wells (oil and/or gas), for example hydraulic fracturing, conformance, diversion; in water treatment in open, closed or semi-closed circuit; in the treatment of fermentation musts; in sludge treatment; in the construction; in wood processing; in the treatment of hydraulic composition (concrete, cement, mortar and aggregates); in the mining industry; in the formulation of cosmetic products; in the formulation of detergents; in textile manufacturing; in geothermal energy; in the manufacture of sanitary liners; or in agriculture.

The invention also relates to the use of the polymer according to the invention as a flocculant, coagulant, binding agent, fixing agent, viscosity reducing agent, thickening agent, absorbent agent, friction reducing agent, dewatering agent, water retention agent. filler, dehydrating agent, conditioning agent, stabilizing agent, fixing agent, film-forming agent, sizing agent, superplasticizing agent, clay inhibitor, or dispersant.

## Description of the Invention

By "polymer" we mean a polymer comprising at least one monomer A and optionally at least one monomer of formula (AP), a structuring system comprising at least one compound I and at least one compound II and optionally at least one monomer B or C.

By "prepolymer" we mean a growing polymer, which polymerization process has not been stopped and that still undergoes polymerization upon monomer addition. In other terms, a prepolymer is not a polymer for which the polymerization process has been stopped by a termination step. It does not correspond to a polymer.

By "hydrophilic monomer," we designate a monomer which has an octanol/water partition coefficient, $K_{ow}$, of less than or equal to 1, in which the partition coefficient $K_{ow}$ is determined at 25°C in an octanol/water mixture having a volume ratio of 1/1, at a pH between 6 and 8.

By "hydrophobic monomer," we designate a monomer which has an octanol/water partition coefficient, $K_{ow}$, greater than or equal to 1, in which the partition coefficient $K_{ow}$ is determined at 25°C in an octanol/water mixture having a volume ratio of 1/1, at a pH between 6 and 8.

The octanol/water partition coefficient, $K_{ow}$, represents the ratio of concentrations (g/L) of a monomer between the octanol phase and the aqueous phase. It is defined as follows:

$$K_{ow} = \frac{[monomer]_{octanol}}{[monomer]_{water}}$$

By "water-soluble polymer", we mean a polymer which gives an aqueous solution without insoluble particles when dissolved with stirring at 25°C and a concentration of 10g $L^{-1}$, in deionized water.

Throughout the description, the viscosities are measured with a Brookfield viscometer, at 25°C in aqueous solution.

In this description, it is assumed that the person skilled in the art is able to determine the appropriate Brookfield viscometer module and speed for the viscosity range to be measured. This type of measurement is in fact part of the general knowledge of those skilled in the art.

By "X and/or Y" we mean "X," or "Y," or "X and Y."

The invention also covers all possible combinations of the other than disclosed embodiments, whether they are preferred embodiments or given by way of example. Furthermore, when ranges of values are indicated, the limits are part of these ranges. The disclosure also includes all combinations between the limits of these value ranges. For example, the value ranges "1-20, preferably 5-15", imply disclosure of the ranges "1-5", "1-15", "5-20", and "15-20" and the values 1, 5, 15 and 20.

In the description, a base polymer designates the water-soluble polymer obtained according to the method of the invention before it undergoes the hydrolysis reaction according to step g).

### Water-Soluble Polymer

This invention relates to a water-soluble polymer comprising:

- at least one monomer A obtained by partial or total hydrolysis of the amide group $-N(R^2)-CO-R^1$ of a monomer of formula (AP):

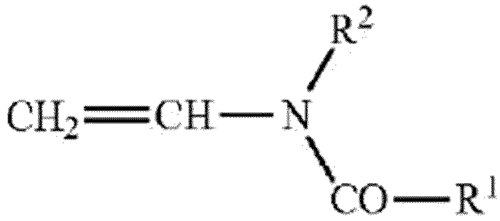

(AP)

where $R^1$ and $R^2$ are, independently, a hydrogen atom or an alkyl chain of 1 to 6 carbons,

- at least one structuring system comprising:

  (i) at least one compound I chosen from: allylsulfonic acid, methallylsulfonic acid, allyl disulfonic acid, methallyl disulfonic acid, their salts, and mixtures thereof;
  (ii) at least one compound II of formula (II):

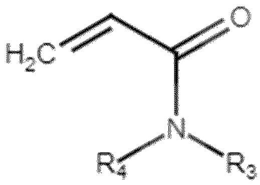

(II)

  $R_3$ and $R_4$ being, independently of one another, a hydrogen atom, a methyl group, an ethyl group, an isopropyl group or a $CH_2$-OH group;
  $R_3$ and $R_4$ not both being a hydrogen atom ($R_3 \neq H$ when $R_4$=H; $R_4 \neq H$ when $R_3$=H),

- optionally at least one hydrophilic cationic monomer B distinct from monomer A,
- optionally at least one monomer C chosen from hydrophilic anionic monomers distinct from compound I, hydrophilic nonionic monomers distinct from monomer AP and compound II, hydrophilic zwitterionic monomers and hydrophobic monomers,

at least one of the fractions F1, F2 or F3 contains at least one monomer of formula (AP), at least one of the fractions F1, F2 or F3 contains at least one compound I and at least one of the fractions F1, F2 or F3 contains at least one minus one compound II.

As a result, the base polymer and the water-soluble polymer are not interpenetrating polymer network (IPN).

## Monomeric Composition

### Monomer A

The water-soluble polymer according to the invention is a synthetic polymer. It may also comprise one or more hydrophilic cationic monomers B.

Monomer A is advantageously a vinylamine obtained by hydrolysis of a monomer of formula (AP).

Advantageously, the monomer(s) of formula (AP) can be chosen, in particular from N-vinylformamide, N-vinyl-N-methylformamide, N-vinylacetamide, N-vinyl-N-methylacetamide, N-Vinyl-N-ethylacetamide, N-vinyl-propianamide, N-vinyl-N-methylpropianamide and N-vinylbutyramide. Preferably, it is N-vinylformamide.

The water-soluble polymer advantageously comprises between 1 and 100 mol% of cationic monomer(s) A, preferably at least 30 mol%, more preferably at least 50 mol%, still more preferably at least 70 mol%. Monomer A is overall cationic since it is obtained by partial or total hydrolysis of the amide group -N($R^2$)-CO-$R^1$ of a monomer of formula (AP).

### Hydrophilic cationic monomer B

The water-soluble polymer may optionally comprise one or more hydrophilic cationic monomers B distinct from monomer A.

Advantageously, the hydrophilic cationic monomer(s) B which can be used in the context of the invention are

chosen from monomers derived from vinyl-type units (advantageously acrylamide, acrylic, allylic or maleic), wherein these monomers possess a phosphonium or quaternary ammonium function. Mention may be made, in particular and in a non-limiting manner, of diallyldialkyl ammonium salts such as diallyl dimethyl ammonium chloride (DADMAC); acidified or quaternized salts of dialkyl-aminoalkylacrylamides; acidified or quaternized salts of dialkyl-aminoalkylmethacrylamides, such as for example methacrylamido-propyl trimethyl ammonium chloride (MAPTAC), acrylamido-propyl trimethyl ammonium chloride (APTAC), acidified or quaternized salts of dialkyl aminoalkyl acrylate such as quaternized or salified dimethylaminoethyl acrylate (DMAEA), acidified or quaternized salts of dialkyl aminoalkyl methacrylate such as quaternized or salified dimethylaminoethyl methacrylate (DMAEMA) and mixtures thereof. Advantageously, the alkyl groups are $C_1$-$C_3$. Preferably monomer B is a diallyldialkyl ammonium salt, more preferably it is diallyl dimethyl ammonium chloride.

A person skilled in the art will know how to prepare quaternized monomers, for example using a quaternizing agent of the R-X type, where R is an alkyl group and X is a halogen or sulfate. The quaternization agent can be chosen from dialkyl sulfates comprising from 1 to 6 carbon atoms or alkyl halides comprising from 1 to 6 carbon atoms. Preferably, the quaternization agent is chosen from methyl chloride, benzyl chloride, dimethyl sulfate, or diethyl sulfate. Furthermore, this invention also covers monomers of the DADMAC, APTAC and MAPTAC type, the halide counterion of which is fluoride, bromide or iodide instead of chloride.

By "quaternization agent" we mean a molecule capable of alkylating a tertiary amine.

The water-soluble polymer advantageously comprises between 0 and 99 mol% of hydrophilic cationic monomer(s) B, preferably between 0 and 50 mol%, more preferably between 0 and 30 mol%.

**Monomer C**

The water-soluble polymer according to the invention may optionally comprise at least one monomer C chosen from hydrophilic anionic monomers distinct from compound I, hydrophilic nonionic monomers distinct from monomer of formula (AP) and compound II, hydrophilic zwitterionic monomers and hydrophobic monomers.

*Distinct hydrophilic anionic monomers of compound I*

Advantageously, the hydrophilic anionic monomer(s) that can be used in the context of the invention can be selected from a broad group. The monomers may have vinyl functions (advantageously acrylic, maleic, fumaric, malonic, itaconic, or allylic) and contain a carboxylate, phosphonate, phosphate, sulfate, sulfonate group, or another group with an anionic charge. Examples of suitable monomers include acrylic acid; methacrylic acid; dimethylacrylic acid; itaconic acid; crotonic acid; maleic acid; fumaric acid; acrylamido undecanoic acid; 3-acrylamido 3-methylbutanoic acid; maleic anhydride; strong acid monomers with, for example, a sulfonic acid or phosphonic acid function, such as vinylsulfonic acid, vinylphosphonic acid, 2-methylidenepropane-1,3-disulfonic acid, 2-sulfoethylmethacrylate, sulfopropylmethacrylate, sulfopropylacrylate, allylphosphonic acid, styrene sulfonic acid, 2-acrylamido-2-methylpropane sulfonic acid (ATBS), 2-acrylamido-2-methylpropane disulfonic acid; water-soluble salts of these monomers such as their alkali metal, alkaline earth metal or ammonium salts; and mixtures thereof. Preferably it is acrylic acid and/or 2-acrylamido-2-methylpropane sulfonic acid (ATBS). More preferably, it is acrylic acid.

In one particular embodiment, the hydrophilic anionic monomer(s) can be partially or fully salified.

By salified, we mean the substitution of a proton of at least one acid function of the type -R(=O)-OH (with R=P, S or C) of the anionic monomer by a metal or ammonium cation to form a salt of the -R(=O)-OX type (X being a metal or ammonium cation). In other words, the non-salified form corresponds to the acid form of the monomer, e.g., R-C(=O)-OH in the case of the carboxylic acid function, while the salified form of the monomer corresponds to the R-C(=O)-$O^-$ $X^+$ form, $X^+$ corresponding to an alkaline or ammonium cation. The salification of the acid functions of the water-soluble polymer may be partial or fully salified.

The salified form advantageously corresponds to the salts of alkali metals (Li, Na, K...), of alkaline-earth metals (Ca, Mg...) or of ammonium (e.g., the ammonium ion or a tertiary ammonium), or mixtures thereof. Preferred salts are sodium salts.

Salification can take place partially or totally, before, during, or after the polymerization.

Advantageously between 0 and 100 mol% of the hydrophilic anionic monomer(s) are in salified form, preferably between 10 and 90 mol%.

The water-soluble polymer according to the invention advantageously comprises between 0 and 30 mol% of hydrophilic anionic monomer(s), preferably less than 20 mol%, more preferably less than 10 mol%.

In a preferred embodiment, the water-soluble polymer does not comprise any anionic monomer(s) other than compound I.

In one particular embodiment, when at least one hydrophilic anionic monomer is 2-acrylamido-2-methylpropanesulfonic acid, it may be at least partially in its hydrated form. The hydrated form of 2-acrylamido-2-methylpropane

sulfonic acid is a specific form of 2-acrylamido-2-methylpropane sulfonic acid which can be obtained by controlled crystallization of 2-acrylamido-2-methylpropane sulfonic acid monomer. US 10,759,746 describes how to obtain the hydrated form of 2-acrylamido-2-methylpropanesulfonic acid.

In a preferred embodiment, the water-soluble polymer does not comprise a hydrophilic anionic monomer.

*Hydrophilic nonionic monomers distinct from monomer AP and compound II*

Advantageously, the hydrophilic nonionic monomer or monomers which can be used in the context of the invention are chosen from the group comprising water-soluble vinyl monomers, such as acrylamide, methacrylamide, N-alkylacrylamides, N-alkylmethacrylamides, alkoxylated esters of acrylic acid, alkoxylated esters of methacrylic acid, N-vinylpyrrolidone, N-methylolacrylamide, N-vinyl acetamide, N-vinyl imidazole, N-vinyl succinimide, acryloyl morpholine (ACMO), acryloyl chloride, glycidyl methacrylate, glyceryl methacrylate, diacetone acrylamide, hydroxyalkyl (meth) acrylates, thioalkyl (meth)acrylates, hydroxyalkylacrylates, hydroxyalkyl methacrylates, and mixtures thereof. Among these nonionic monomers, the alkyl groups are advantageously $C_1$-$C_5$, more advantageously $C_1$-$C_3$. These are preferably linear alkyls. Preferably, the nonionic monomer is acrylamide.

The water-soluble polymer according to the invention advantageously comprises between 0 and 30 mol% of hydrophilic anionic monomer(s), preferably less than 20 mol%, more preferably less than 10 mol%.

In a preferred embodiment, the water-soluble polymer does not comprise any non-ionic monomer(s) other than compound(s) II.

The water-soluble polymer can be post-hydrolyzed. Post-hydrolysis is the reaction of the polymer after polymerization. This step consists of reacting hydrolyzable monomer functional groups, advantageously non-ionic, more preferably amide or ester functions, with a hydrolyzing agent. This hydrolysis agent may be an enzyme, an ion exchange resin or an alkali metal. Preferably, the hydrolysis agent is a Brønsted base. During this step of post-hydrolysis of the water-soluble polymer, the number of carboxylic acid functions increases. Indeed, the reaction between the base and the amide or ester functions present in the water-soluble polymer produces carboxylate groups.

*Hydrophilic zwitterionic monomers*

Advantageously, the hydrophilic zwitterionic monomer or monomers which can be used in the context of the invention are chosen, in particular, from derivatives of a vinyl-type unit (advantageously acrylamide, acrylic, allylic or maleic) having an amine or quaternary ammonium function and an acid function of the carboxylic (or carboxylate), sulfonic (or sulfonate) or phosphoric (or phosphate) type. Preferably, this monomer comprises an amine or quaternary ammonium function and an acid function of the carboxylic (or carboxylate), sulfonic (or sulfonate) or phosphoric (or phosphate) type. Dimethylaminoethyl acrylate derivatives, such as 2-((2-9 (acryloyloxy) ethyl) dimethylammonio) ethane-1-sulfonate, may be mentioned in particular and in a non-limiting manner, 3 - ((2-(acryloyloxy) ethyl) dimethylammonio) propane-1-sulfonate, 4 - ((2-(acryloyloxy) ethyl) dimethylammonio) butane-1-sulfonate, [2-(acryloyloxy) ethyl] (dimethylammonio) acetate, dimethylaminoethyl methacrylate derivatives such as 2 - ((2-(methacryloyloxy) ethyl) dimethylammonio) ethane-1-sulfonate, 3 - ((2-(methacryloyloxy) ethyl) dimethylammonio) propane-1-sulfonate, 4 - ((2 - (methacryloyloxy) ethyl) dimethylammonio) butane-1-sulfonate, [2-(methacryloyloxy) ethyl] (dimethylammonio) acetate, propylacrylamide dimethylamino derivatives such as 2 - ((3-acrylamidopropyl) dimethylammonio) ethane-1-sulfonate, 3 - ((3-acrylamidopropyl) dimethylammonio) propane-1-sulfonate, 4 - ((3-acrylamidopropyl) dimethylammonio) butane-1-sulfonate, [3-(acryloyl) oxy) propyl] (dimethylammonio) acetate, dimethylamino propyl methylacrylamide, or even derivatives such as 2 - ((3-methacrylamidopropyl) dimethylammonio) ethane-1-sulfonate, 3 - ((3-methacrylamidopropyl) dimethylammonio) propane-1-sulfonate, 4 - ((3-methacrylamidopropyl) dimethylammonio) butane-1-sulfonate and propyl [3-(methacryloyloxy)] (dimethylammonio) acetate, and mixtures thereof.

The water-soluble polymer according to the invention advantageously comprises between 0 and 30 mol% of hydrophilic zwitterionic monomer(s), preferably less than 20 mol%, more preferably less than 10 mol%.

In a preferred embodiment, the water-soluble polymer does not comprise a hydrophilic zwitterionic monomer.

*Hydrophobic Monomers*

Advantageously, the monomer(s) having a hydrophobic character which can be used in the context of the invention can be chosen, in particular, from (meth)acrylic acid esters with an alkyl, arylalkyl and/or ethoxylated chain and/or propoxylated; (meth)acrylamide derivatives with an alkyl, arylalkyl or dialkyl and/or ethoxylated and/or propoxylated chain; cationic allyl derivatives having an alkyl, arylalkyl or dialkyl chain and/or an ethoxylated and/or propoxylated chain; hydrophobic anionic or cationic derivatives of (meth)acryloyl; and anionic or cationic monomeric derivatives of (meth) acrylamide carrying a hydrophobic chain. Hydrophobic monomers may include halogen atoms, for example chlorine.

Among these hydrophobic monomers:

- the alkyl groups are preferably $C_3$-$C_{20}$, more preferably $C_3$-$C_8$. $C_6$-$C_{20}$ alkyls are preferably linear alkyls while $C_3$-$C_5$ alkyls are preferably branched,
- arylalkyl groups are preferably $C_7$-$C_{25}$, more preferably $C_7$-$C_{15}$,
- the ethoxylated chains preferably comprise 6 to 100 -$CH_2$-$CH_2$-O- groups, more preferably 10 to 40,
- the propoxylated chains preferably comprise 1 to 50 -$CH_2$- groups $CH_2$-$CH_2$-O-, more preferably 1 to 20.

Preferred monomers belonging to these classes are, for example:

- n-hexyl (meth)acrylate, n-octyl (meth)acrylate, octyl (meth)acrylamide, octyl (meth)acrylate, lauryl, lauryl (meth) acrylamide, myristyl (meth)acrylate, myristyl (meth)acrylamide, pentadecyl (meth)acrylate, pentadecyl (meth)acrylamide, cetyl (meth)acrylate, (meth) )cetyl acrylamide, oleyl (meth)acrylate, oleyl (meth)acrylamide, erucyl (meth) acrylate, erucyl (meth)acrylamide, and combinations thereof.
- cationic allyl derivatives having formula (III) or (IV):

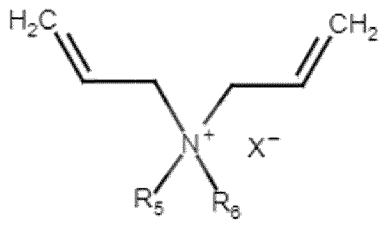

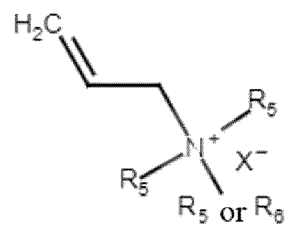

(III) (IV)

where, $R_5$: independently an alkyl chain containing 1 to 4 carbons;
$R_6$: an alkyl or arylalkyl chain containing 8 to 30 carbons;
X: a halide selected from the group consisting of bromides, chlorides, iodides, fluorides and any negatively charged counterion;
and, preferably, hydrophobic cationic derivatives of the methacryloyl type corresponding to formula (V):

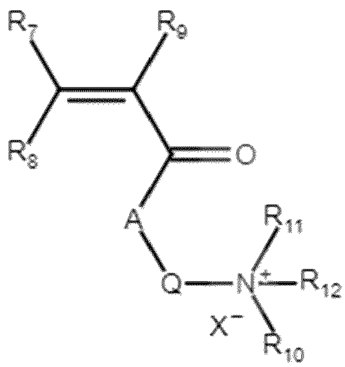

(V)

in which A: O or N-$R_9$ (preferably A=N-$R_9$),
$R_7$, $R_8$, $R_9$, $R_{10}$, $R_{11}$: independently hydrogen or an alkyl chain containing 1 to 4 carbons,
Q: an alkyl chain containing 1 to 8 carbons,
$R_{12}$: an alkyl or arylalkyl chain containing 8 to 30 carbons,
X: a halide selected from the group consisting of bromides, chlorides, iodides, fluorides, and any negatively charged counterion.

The water-soluble polymer according to the invention generally comprises less than 3 mol% hydrophobic monomer(s).

When the water-soluble polymer according to the invention comprises hydrophobic monomers, it is present in an amount such that the polymer remains soluble in water.

In a preferred embodiment according to the invention, the hydrophilic cationic polymer does not comprise a hydrophobic monomer.

The amounts of the various monomers will be adjusted by one skilled in the art so as not to exceed 100% molar when preparing the water-soluble polymer. Preferably, monomers A and B represent 100 mol% of the monomers of the water-soluble polymer.

**Structuring System**

The structuring system of the water-soluble polymer comprises:

(i) at least one compound I;
(ii) at least one compound II.

This structuring system makes it possible to obtain a structured water-soluble polymer.

By *"structured polymer"* we mean a non-linear polymer which has side chains. This structuring comes from the presence of compounds I and II.

Compound I used in the context of the invention is advantageously chosen from: allylsulfonic acid, methallylsulfonic acid, allyl disulfonic acid, methallyl disulfonic acid, their salts and mixtures thereof. Preferably, it is methallylsulfonic acid, for example sodium methallylsulfonate.

The salified form advantageously corresponds to the salts of alkali metals (Li, Na, K...), of alkaline-earth metals (Ca, Mg...) or of ammonium (e.g., ammonium ion or a tertiary ammonium). Preferred salts are sodium salts.

The water-soluble polymer advantageously comprises between 500 and 50,000 ppm of compound I relative to the total weight of the monomer(s) of formula (AP) (+ optionally monomers B and C) of the water-soluble polymer, preferably between 800 and 20,000 ppm, more preferably between 1,000 and 10,000 ppm.

Compound II used in the context of the invention is of formula (II):

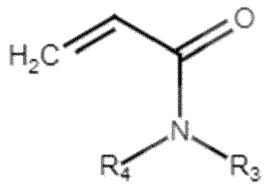

(II)

$R_3$ and $R_4$ being, independently of one another, a hydrogen atom, a methyl group, an ethyl group, an isopropyl group or a $CH_2$-OH group;
$R_3$ and $R_4$ not both being a hydrogen atom ($R_3 \neq H$ when $R_4 = H$; $R_4 \neq H$ when $R_3 = H$).

Compound II used in the context of the invention is advantageously chosen from: N,N-dimethylacrylamide, N,N-diethylacrylamide, N,N-isopropylacrylamide, N-methylolacrylamide and mixtures thereof. Preferably, N,N-dimethylacrylamide is used.

The water-soluble polymer advantageously comprises between 500 and 50,000 ppm of compound II relative to the total weight of the monomer(s) of formula (AP) (+ optionally monomers B and C) of the water-soluble polymer, preferably between 1,000 and 30,000 ppm, more preferably between 2,000 and 20,000 ppm.

In the water-soluble polymer, the mass ratio between compound I and compound II is advantageously between 0.01 and 100, preferably between 0.1 and 10.

In one preferred embodiment, the amount of compound I is greater than the amount of compound II. Thus, the mass ratio between compound I and compound II is advantageously greater than 1 and less than or equal to 100, preferably greater than 1 and less than or equal to 10.

**Optional**

The water-soluble polymer may further comprise at least one cross-linking agent. This cross-linking agent may be chosen from polyethylenically unsaturated monomers (with at least two unsaturated functions), such as vinyl functions, in particular allyl functions, acrylic functions, or from monomers with at least two epoxy functions. Examples include methylene bis acrylamide (MBA), triallyamine, tetraallylammonium chloride, 1,2 dihydroxyethylene bis-(N-acrylamide) and mixtures thereof. Preferably methylene bis acrylamide (MBA) would be used.

The amount of cross-linking agent in the water-soluble polymer is advantageously between 5 and 5,000 ppm, relative to the total weight of the monomer(s) of formula (AP) (+ optionally monomers B and C) of the water-soluble polymer, more preferably between 50 and 3000 ppm.

In one particular embodiment, the water-soluble polymer comprises no cross-linking agent.

The water-soluble polymer according to the invention may further comprise at least one transfer agent, for example, selected from methanol, isopropyl alcohol, sodium hypophosphite, 2-mercaptoethanol, and mixtures thereof. We can also cite transfer agents of the xanthate, dithiocarbonate, dithiocarbamate and trithiocarbonate type and mixtures thereof. Preferably, the transfer agent is sodium hypophosphite.

The amount of transfer agent in the water-soluble polymer is advantageously between 10 and 10,000 ppm, based on the total weight of monomer(s) of formula (AP) (+ optionally monomers B and C) in the water-soluble polymer, more preferably between 50 and 5,000 ppm.

In a particular embodiment according to the invention, the water-soluble polymer does not comprise a cross-linking agent.

**Physical Characteristics of the Base Polymer**

The base polymer has a weight average molecular weight advantageously between 50,000 and 25,000,000 g/mol, preferably between 75,000 and 15,000,000 g/mol, more preferably between 100,000 and 10,000,000 g/mol. This is the weight average molecular weight.

The weight-average molecular weight is preferably measured by *Gel Permeation Chromatography* coupled to a Malls detector.

The base polymer is obtained and used in liquid form.

The viscosity of the solution comprising the base polymer is advantageously between 100 and 50,000 cps, preferably between 1,000 and 20,000 cps.

**Physical Characteristics of Water-Soluble Polymer**

The water-soluble polymer has a weight average molecular weight advantageously between 50,000 and 25,000,000 g/mol, preferably between 75,000 and 15,000,000 g/mol, more preferably between 100,000 and 10,000,000 g/mol. This is the weight average molecular weight.

The weight-average molecular weight is preferably measured by *Gel Permeation Chromatography* coupled to a Malls detector.

The water-soluble polymer is obtained and used in liquid form.

The viscosity of the solution comprising the water-soluble polymer is advantageously between 20 and 2,000 cps, preferably between 50 and 1,500 cps.

The concentration of the water-soluble polymer in the solution resulting from step g) is advantageously between 5 and 30% by weight relative to the total weight of the solution comprising the water-soluble polymer, preferably between 8 and 25% by weight, more preferably between 10 and 20% by weight.

**Gradient**

The water-soluble polymer according to the invention is a gradient polymer.

Polymers with a gradient structure are polymers composed of two or more monomers in which the change in monomer composition is gradual, in contrast to block polymers, which have an abrupt change in composition, and random polymers, which we have no continuous change in composition. In the gradient polymer, due to the gradual change in composition along the length of the polymer chain, less intra-chain and inter-chain repulsion is observed.

The gradient can be formed by a spontaneous or forced gradient. Spontaneous gradient polymerization is due to differences in monomer reactivity. Forced gradient polymerization involves varying the composition of introduced monomers throughout the polymerization time.

A forced gradient process comprises (1) introducing a first fraction of monomers into a reactor, (2) adding at least one supplemental fraction of monomers advantageously different from the first and (3) polymerizing monomers introduced into the reactor. The polymerization of the monomers is initiated as soon as the first fraction is introduced.

The addition to the supplemental monomer fraction can be carried out in parallel with the introduction of the first monomer fraction into the reactor (the introduction of the fractions can therefore begin and end at the same time). Alternatively, the start of the first monomer feed (first fraction) into the reactor can precede the start of addition of a second monomer fraction. Alternatively, a first and a second fraction can be introduced simultaneously, but the duration of addition of the second fraction can be greater than the duration of introduction of the first fraction into the reactor. This embodiment is also applicable to processes using at least 3 monomer fractions.

According to the method of the invention, the water-soluble polymer obtained is formed by the sequenced addition of monomers, in other words it is a forced gradient method.

The method according to the invention comprises a first fraction (F1) and at least two supplemental fractions (F2 and F3). At least one of the fractions F1, F2 and F3 of the method is different from the other fractions. Preferably, the fractions F1, F2, and F3 are different. By different fraction, we designate a fraction having a composition of different monomers (ratio and/or nature of the monomers) and/or of compounds I and II (ratio and/or nature of the compounds I and II).

Preferably, at least two of the fractions of the method comprise a monomer of different nature.

**Polymerization Process**

The invention also relates to a method for the sequential preparation of this water-soluble polymer according to the following steps:

a) formation of a solution (S1) comprising at least a first fraction (F1) containing (1) at least one monomer of formula (AP) and/or at least one of optional monomers B and C and (2) at least one compound chosen from compounds I and II; wherein formula (AP) is:

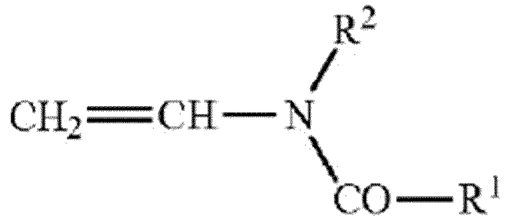

(AP)

where $R^1$ and $R^2$ are, independently, a hydrogen atom or an alkyl chain of 1 to 6 carbons,
wherein compound I is chosen from: allylsulfonic acid, methallylsulfonic acid, allyl disulfonic acid, methallyl disulfonic acid, their salts, and mixtures thereof;
wherein compound II of formula (II) is:

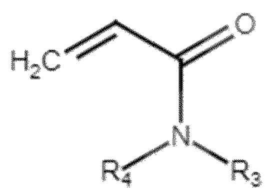

(II)

$R_3$ and $R_4$ being, independently from one another, a hydrogen atom, a methyl group, an ethyl group, an isopropyl group, or a $CH_2$-OH group;
$R_3$ and $R_4$ are not both a hydrogen atom ($R_3 \neq H$ when $R_4=H$; $R_4 \neq H$ when $R_3=H$),

b) polymerization 1 (PO1) of fraction F1 to form a solution of a first prepolymer (PP1);
c) addition, to the solution comprising PP1, of a second fraction (F2) containing (1) at least one monomer of formula (AP) and/or at least one of the optional monomers B and C and (2) at least one compound chosen from compounds I and II;
d) polymerization 2 (PO2) of fraction F2 on PP1 to form a second prepolymer (PP2);
e) addition, to the solution comprising PP2, of a third fraction (F3) containing (1) at least one monomer of formula (AP) and/or at least one of the optional monomers B and C and (2) at least one compound chosen from compounds I and II;
f) polymerization 3 (PO3) of fraction F3 on PP2 to form a solution comprising a base polymer;
g) partial or total hydrolysis of the amide group -N($R^2$)-CO-$R^1$ of the monomer of formula (AP) of the base polymer in order to obtain the water-soluble polymer; at least one of the fractions F1, F2 or F3 contains at least one monomer of formula (AP), at least one of the fractions F1, F2 or F3 contains at least one compound I and at least one of the fractions F1, F2 or F3 contains at least one compound II.

This method may include the addition of additional fractions, but none after step g) of hydrolysis of the base polymer.

It is possible that the improved performance of the polymers obtained according to the method of the invention is due to the fact that the polymerization is carried out in sequence and continuously, that is to say without interruption.

By "in sequence," we mean that the polymerization of the monomers of the base polymer takes place in several fractions while not being interrupted, that is to say that the addition of the fractions takes place continuously and that the polymerization does not stop. The different steps a) to f) are therefore carried out successively. In other words, a first monomer fraction may be added during casting and polymerized to form a first prepolymer PP1, which continues to polymerize with the F2 fraction to form the prepolymer PP2, which itself continues to polymerize with the F3 fraction to obtain the base polymer at the end of polymerization. At least one of the fractions F1, F2, and F3 of the method is different from the other fractions. Preferably, the fractions F1, F2, and F3 are different. The addition of different fractions during the polymerization process made it possible to obtain a gradient in the composition of the base polymer.

Step g) is carried out on the base polymer once the polymerization is completed. It can be carried out consecutively at the end of polymerization or at another later time. Preferably, it is carried out consecutively to PO3. In other words, the base polymer used for step g) no longer continues to polymerize. On the other hand, it undergoes post-treatment which modifies its chemical structure. Step g) is advantageously carried out in a reactor other than the polymerization because it requires dilution of the solution comprising the base polymer. The dilution of the base polymer is advantageously carried out in water.

The hydrolysis of step g) is advantageously carried out on polymers having monomer(s) of formula (AP).

In the polymerization method according to the invention, the total sum of the molar percentages of the monomers of the different fractions is equal to the total sum of the molar percentages of the monomers of the water-soluble polymer.

**Step a) formation of a solution (S1) comprising a first fraction (F1)**

**Solution (S1)**

Solution S1 is generally composed of:

- a solvent;
- an initiator;
- a first fraction F1.

The solvent is advantageously water, or a solvent in which the monomers and the water-soluble polymer are soluble. Preferably, the solvent is water.

The polymerization initiators used can be any compounds which dissociate into radicals under the polymerization conditions, e.g. organic peroxides, hydroperoxides, hydrogen peroxide, persulfates, azo compounds and redox couples. The use of water-soluble initiators is preferred. In some cases, it is advantageous to use mixtures of various polymerization initiators, e.g., mixtures of redox catalysts and azo compounds. Preferably, these are persulfates or azo compounds.

In one particular embodiment, solution S1 is formed by mixing solvent, initiator and fraction F1 in a polymerization tank.

In this particular embodiment, fraction F1 can be added all at once, in batches, or by pouring, that is to say drop by drop into the solvent/initiator mixture. Preferably, fraction F1 is added all at once to the polymerization tank.

In a particular embodiment, the initiator and the F1 fraction are added by pouring into a polymerization tank comprising the solvent. They can be added separately or pre-mixed. Preferably, they are added separately.

In a preferred embodiment, the initiator is added continuously throughout the polymerization process. In this case, the initiator is advantageously added in parallel with the various fractions, during the various polymerization stages and during any aging stages of the other than prepolymers (PP1 and PP2) and the base polymer.

In this preferred embodiment of the invention, the duration of the initiator casting is between 50 minutes and 560 minutes, preferably between 130 minutes and 430 minutes.

**First Fraction (F1)**

Advantageously, fraction F1 comprises between 10 and 65% by weight of monomer(s) (formula (AP) + optionally monomers B and C) relative to the total weight of monomer(s) (AP + optionally monomers B and C) of the water-soluble polymer, preferably between 15 and 60% by weight.

Fraction F1 advantageously comprises between 0 and 100 mol% of monomers of formula (AP), preferably between 5 and 90 mol%, more preferably between 10 and 85 mol% relative to the total number of moles of monomers in fraction F1.

When the water-soluble polymer comprises a hydrophilic cationic monomer B, fraction F1 advantageously comprises between 0 and 100 mol% of hydrophilic cationic monomers B, preferably between 10 and 95 mol%, more preferably between 15 and 90 mol% relative to the total number of moles of monomers in fraction F1.

Fraction F1 advantageously comprises between 250 and 30,000 ppm of compound I based on the total weight of monomer(s) of formula (AP) (+ optionally monomers B and C) of the water-soluble polymer, preferably between 350 and 10,000 ppm, more preferably between 500 and 7,000 ppm.

The fraction F1 advantageously comprises between 5 and 30,000 ppm of compound II relative to the total weight of monomer(s) of formula (AP) (+ optionally monomers B and C) of the water-soluble polymer, preferably between 500 and 20,000 ppm, more preferably between 1,000 and 15,000 ppm.

The different monomers and compounds making up F1 are advantageously added in the form of solutions. These solutions can be added separately or as a mixture into the polymer tank, all at once, in batches, or by pouring, that is to say drop by drop, to form the solution S1. Preferably, the addition is carried out as a mixture and all at once.

When fraction F1 is added during casting, the casting advantageously lasts between 10 minutes and 80 minutes, preferably between 40 minutes and 70 minutes.

In a preferred embodiment, fraction F1 is prepared in the reactor (polymerization tank) before adding initiator.

In a particular embodiment, fraction F1 comprises at least one monomer of formula (AP), at least one compound I and at least one compound II.

In one particular embodiment, fraction F1 comprises at least one monomer of formula (AP), at least one hydrophilic cationic monomer B, at least one compound I and at least one compound II.

In one particular embodiment, fraction F1 comprises at least one hydrophilic cationic monomer B, at least one compound I and at least one compound II.

The pH of fraction F1 is advantageously adjusted between 4 and 9, preferably between 5 and 8, more preferably between 6 and 7.

The pH of the F1 fraction can be adjusted using acid or base depending on the initial pH of the F1 fraction. As an acid, by way of example and in a non-limiting manner, mention may be made in particular of chloridic acid, sulfuric acid, nitric acid, phosphoric acid. As a base, by way of example and in a non-limiting manner, mention may be made in particular of sodium hydroxide, potassium hydroxide and ammonia.

### Step b) polymerization of fraction F1 to form a first prepolymer (PP1)

#### Polymerization 1 (PO1)

Prior to polymerization PO1, the atmosphere of the polymerization tank can be replaced by an inert gas such as, for example, nitrogen or argon.

Polymerization PO1 is generally a radical polymerization. Polymerization initiators can be used, in particular initiators dissociating into radicals under the polymerization conditions.

Polymerization PO1 is generally initiated at a temperature between 70 and 90°C, preferably between 75 and 85°C. The polymerization temperature is then controlled using cooling means so as not to exceed 95°C.

Polymerization PO1 generally lasts between 10 minutes and 80 minutes, preferably between 40 minutes and 70 minutes.

Polymerization advantageously starts at the moment when the first monomers, solvent and initiator are in contact, in other words, the polymerization time PO1 advantageously corresponds to the duration of the casting of the fraction F1. Advantageously, the polymerization time corresponds to the casting time when fraction F1 is cast.

#### Prepolymer (PP1)

At the end of the polymerization PO1, a prepolymer PP1 is obtained.

In a particular embodiment according to the invention, the PP1 chain is left aging between 5 minutes and 60 minutes, preferably between 10 minutes and 30 minutes.

By "left aging" we mean that the temperature of the medium is maintained between 80 and 90°C after the end of the polymerization to allow an increase in viscosity through internal branching phenomena of the polymer. This definition of aging concerns all stages of the polymerization process.

### Step c) addition of a second fraction (F2) to the solution comprising PP1

#### Second fraction F2

Advantageously, fraction F2 comprises between 10 and 80% by weight of monomer(s) (formula (AP) + optionally

monomers B and C) based on the total weight of monomer(s) (formula (AP) + optionally monomers B and C) of the water-soluble polymer, preferably between 15 and 70%.

Fraction F2 advantageously comprises between 0 and 100 mol% of monomer(s) of formula (AP), preferably between 5 and 90 mol%, more preferably between 10 and 85 mol% relative to the total number of moles of monomers in fraction F2.

When the water-soluble polymer comprises a hydrophilic cationic monomer B, fraction F2 advantageously comprises between 0 and 100 mol% hydrophilic cationic monomers B, preferably between 10 and 95 mol%, more preferably between 15 and 90 mol% relative to the total number of moles of monomers in fraction F2.

Fraction F2 advantageously comprises between 250 and 30,000 ppm of compounds I based on the total weight of monomer(s) of formula (AP) (+ optionally monomers B and C) of the water-soluble polymer, preferably between 350 and 10,000 ppm, more preferably between 500 and 5,000 ppm.

Fraction F2 advantageously comprises between 250 and 30,000 ppm of compounds II relative to the total weight of monomer(s) of formula (AP) (+ optionally monomers B and C) of the water-soluble polymer, preferably between 500 and 20,000 ppm, more preferably between 1,000 and 15,000 ppm.

The different monomers and compounds making up F2 are advantageously added in the form of solutions. These solutions can be added separately or as a mixture to the polymer tank, all at once, in batches, or by pouring. Preferably, the addition is carried out as a mixture and all at once.

When the F2 fraction is added during casting, the casting time is advantageously between 10 minutes and 100 minutes, preferably between 30 minutes and 90 minutes.

In one preferred embodiment, fraction F2 comprises at least one monomer of formula (AP) and/or B, at least one compound I and at least one compound II.

**Step d) polymerization of fraction F2 on PP1 to form a second prepolymer (PP2)**

**Polymerization (PO2)**

The polymerization PO2 is carried out in continuity with the polymerization PO1, it is carried out under the same time and temperature conditions (advantageously 70 to 90°C for 10 minutes to 100 minutes, preferably between 30 minutes and 90 minutes).

Polymerization PO1 advantageously lasts between 10 minutes and 100 minutes, preferably between 30 minutes and 90 minutes.

Polymerization PO2 begins with the addition of the first monomers of fraction F2.

Advantageously, the polymerization PO2 duration corresponds to the duration of the casting of the fraction F2.

**Prepolymer (PP2)**

At the end of the polymerization PO2, a prepolymer PP2 is obtained.

In a particular embodiment according to the invention, the prepolymer PP2 is left to age between 5 and 60 min, preferably between 10 and 30 min.

**Step e) addition of a third fraction (F3) to the solution comprising PP2**

**Fraction F3**

Advantageously, fraction F3 comprises between 5 and 40% by weight of monomer(s) (formula (AP) + optionally monomers B and C) based on the total weight of monomer(s) (formula (AP) + optionally monomers B and C) of the water-soluble polymer, preferably between 10 and 30%.

Fraction F3 advantageously comprises between 0 and 100 mol% of monomer(s) of formula (AP), preferably between 5 and 90 mol%, more preferably between 10 and 85 mol% relative to the total number of moles of monomers in fraction F3.

When the water-soluble polymer comprises a hydrophilic cationic monomer B, fraction F3 advantageously comprises between 0 and 100 mol% hydrophilic cationic monomers B, preferably between 10 and 95 mol%, more preferably between 15 and 90 mol% relative to the total number of moles of monomers in fraction F3.

Fraction F3 advantageously comprises between 0 and 10,000 ppm of compounds I based on the total weight of monomer(s) of formula (AP) (+ optionally monomers B and C) of the water-soluble polymer, preferably between 10 and 5,000 ppm, more preferably between 20 and 1,500 ppm.

Fraction F3 advantageously comprises between 0 and 10,000 ppm of compounds II based on the total weight of monomer(s) of formula (AP) (+ optionally monomers B and C) of the water-soluble polymer, preferably between 0 and

1,000 ppm.

The different monomers and compounds making up F3 are advantageously added in the form of solutions. These solutions can be added separately or as a mixture to the polymer tank, all at once, in batches, or by pouring (i.e., drop by drop). Preferably, the addition is carried out as a mixture, and drop by drop.

When the fraction F3 is added during casting, the casting time is advantageously between 10 minutes and 100 minutes, preferably between 30 minutes and 90 minutes.

In a particular embodiment, the fraction F3 comprises at least one monomer of formula (AP), and at least one compound I.

**Step f) polymerization of fraction F3 on PP2 to form the water-soluble polymer**

**Polymerization (PO3)**

The polymerization PO3 is carried out in continuity with the polymerization PO2. It is carried out under the time and temperature conditions mentioned for polymerization PO2 (advantageously 70 to 90°C for 10 minutes to 100 minutes, preferably between 30 minutes and 90 minutes).

Polymerization PO3 begins with the addition of the first monomer(s) of fraction F3.

Advantageously, the polymerization PO3 duration corresponds to the duration of the casting of the fraction F3.

At the end of the polymerization PO3, the base polymer is obtained.

The reaction is considered to be complete advantageously 60 minutes after obtaining the base polymer. The optional aging time of the base polymer is not included in these 60 minutes, preferably 90 minutes after, more preferably 120 minutes after. The reaction can also be stopped by adding an excess of initiator and/or water, this step is used to eliminate any residual monomers present in the solution comprising the base polymer, once the base polymer has been obtained, advantageously after the optional aging step when present.

**Optional Step(s)**

The method according to the invention may further comprise supplemental steps and is not limited to the steps described above.

In a particular embodiment according to the invention, the polymerization method according to the invention may comprise the addition of supplemental fractions constituting the base polymer.

In a preferred embodiment according to the invention, the base polymer is left to age between 10 minutes and 180 minutes after step f) of polymerization PO3 and before step g), preferably between 30 minutes and 150 minutes, for instance between 10 minutes and 100 minutes. In the case of adding supplemental fractions, aging is carried out after the last polymerization step and before step g).

In a particular embodiment according to the invention, a cross-linking agent and/or a transfer agent is added during at least one of the steps described above.

In a particular embodiment according to the invention, a cross-linking agent is added in fraction F1 and/or in fraction F2.

When a cross-linking agent is added, it is advantageously chosen from the cross-linking agents previously mentioned.

Advantageously, when a cross-linking agent is added, its amount is between 5 and 5,000 ppm relative to the total weight of the water-soluble polymer (monomer(s) of formula (AP), and optionally monomers B and C), preferably between 50 and 3,000 ppm.

In a particular embodiment according to the invention, a cross-linking agent is added in fraction F1 and/or in fraction F2.

When a transfer agent is added, it is advantageously chosen from the transfer agents previously mentioned.

Advantageously, when a transfer agent is added, its amount is between 10 and 10,000 ppm relative to the total weight of the water-soluble polymer (monomer(s) of formula (AP) and optionally monomers B and C), preferably between 50 and 5,000 ppm.

**Step g) partial or total hydrolysis of the amide group -N($R^2$)-CO-$R^1$ of the monomer(s) of formula (AP) of the base polymer to obtain the water-soluble polymer**

Hydrolysis can be carried out by the action of acid (acid hydrolysis) or base (basic hydrolysis). It is preferably a basic hydrolysis.

Acid hydrolysis can be carried out using any acid known to those skilled in the art, by way of example and without limitation, mention may be made of hydrochloric acid, sulfuric acid, nitric acid, and phosphoric acid.

Acid hydrolysis is advantageously carried out at a pH between 0 and 2, preferably between 0 and 1.

Acid hydrolysis is advantageously carried out at a temperature between 60 and 100°C, preferably between 70 and 90°C, more preferably between 75 and 85°C.

The duration of the acid hydrolysis step is advantageously between 120 minutes and 720 minutes, preferably between 180 hours and 600 hours, more preferably between 300 minutes and 540 minutes.

Basic hydrolysis can be carried out using any base known to those skilled in the art, by way of example and in a non-limiting manner, we can cite in particular sodium hydroxide, potassium hydroxide, ammonia.

Basic hydrolysis is advantageously carried out at a pH between 8 and 14, preferably between 8 and 13, more preferably between 9 and 12.

Basic hydrolysis is advantageously carried out at a temperature of between 60 and 100°C, preferably between 70 and 90°C, more preferably between 75 and 85°C.

The duration of the basic hydrolysis step is advantageously between 60 minutes and 480 minutes, preferably between 120 minutes and 420 minutes, more preferably between 240 minutes and 360 minutes.

Depending on the amount of acid or base added, the monomer(s) of formula (AP) are partially or totally converted into monomer(s) A.

Advantageously between 1 and 100 mol% of monomer(s) of formula (AP) are hydrolyzed, preferably at least 30 mol%, more preferably at least 50 mol%, even more preferably at least 70 mol%.

Once the hydrolysis reaction is complete, the pH is advantageously adjusted to between 6 and 9.

Although prepared in solution, the water-soluble polymer of the invention can also be used in solid form. The main solid/liquid isolation techniques then used are those of atomization or spray drying (which consists of creating a cloud of fine droplets in a hot gas stream for a controlled duration), drum drying, fluidized bed dryers...

**Papermaking Process**

This invention also relates to a method for manufacturing paper or cardboard comprising (1) the addition of a water-soluble polymer according to the invention to an aqueous suspension of fibers and (2) the formation of a sheet of paper or cardboard. Thus, the invention relates to the use of a water-soluble polymer in a papermaking process.

The distinct stages of the process to manufacture paper or cardboard are known and conform to the techniques requiring the knowledge of those skilled in the art. It is not necessary to describe them in more detail because they remain known and traditional in this regard that the skilled person knows, if necessary he can refer to the document: Handbook for Pulp & Paper Technologists,4th Edition, G.A.Smook.

According to the invention, the water-soluble polymer is added in the papermaking method, before or after formation of the sheet of paper or cardboard. Thus, bringing the cellulosic material into contact with the polymer of the invention can be carried out in diverse ways and in particular according to typical methods known to those skilled in the art.

The water-soluble polymer may be added to the cellulosic material in the form of a diluted or undiluted aqueous solution. It may be applied by an impregnation technique or may be added directly into the fibrous slurry at any point in the papermaking process where dry strength agents are usually introduced.

Thus, the polymer according to the invention can be introduced into the thick stock, or into the thin stock. It can be added at the mixing pump, before the headbox or filter screen. Preferably, the polymer is introduced before the headbox.

Preferably, the polymer according to the invention is injected industrially into the fibrous suspension, i.e., before its dilution with white water (thick stock). The consistency of the paste is on the order of 1 to 5% by mass of cellulose fibers.

The papermaking method according to the invention can be implemented with any type of paper pulp, such as for example virgin fiber pulps (Kraft, Bisulfite), recycled fibers, deinked pulps, mechanical, and thermomechanical pulps.

The water-soluble polymer is advantageously added before the formation of the sheet, directly to the fibrous suspension.

It can be added at a single point or at two injection points.

The papermaking method according to the invention can also include the addition of other additives and/or polymers depending on the needs, by way of example and in a non-limiting manner, we can cite: biocides, coagulants, retention agents, flocculants, starch.

**Use**

This invention also relates to the use of water-soluble polymer in the recovery of hydrocarbons (oil and/or gas); in the drilling or cementing of wells; in the stimulation of hydrocarbon wells (oil and/or gas), for example hydraulic fracturing, conformance, diversion; in water treatment in open, closed or semi-closed circuit; in the treatment of fermentation musts; in sludge treatment; in the construction; in wood processing; in the treatment of hydraulic composition (concrete, cement, mortar and aggregates); in the mining industry; in the formulation of cosmetic products; in the formulation of detergents; in textile manufacturing; in geothermal energy; in the manufacture of sanitary liners; or in agriculture.

This invention also relates to the use of the water-soluble polymer according to the invention as a flocculant, coagulant, binding agent, fixing agent, viscosity reducing agent, thickening agent, absorbent agent, friction reducing agent, dewatering agent, water retention agent. filler, dehydrating agent, conditioning agent, stabilizing agent, fixing agent, film-forming agent, sizing agent, superplasticizing agent, clay inhibitor, or dispersant.

The invention and its advantages will be better illustrated by, but not limited to, the following examples.

## Examples

List of abbreviations:

DADMAC: Dimethyldiallyl ammonium (monomer B)
NVF: N-Vinylformamide (monomer of formula (AP))
DMAM: Dimethylacrylamide (compound II)
SMS: Sodium methallyl sulfonate (compound I)
SPS: Sodium persulfate (polymerization initiator)
V-50: 2,2'-Azobis(2-methylpropionamidine)dihydrochloride (polymerization initiator)
MMA: Methylene bis acrylamide (cross-linking agent)

### Description of GPC-Malls Molecular Weight Characterization

Permeable gel chromatography is a method for separating macromolecules according to their hydrodynamic volume. It is coupled to a Malls detector, making it possible to measure the diffusion of light at several angles.

The synthesized polymers are analyzed under the following conditions:

- Instrument: GPC-2
- Columns: Shodex SB-806-HQ & SB-805 Custom
- Method:

  * Temperature: 30 °C
  * Mobile phase: 0.4 M $NaNO_3$, 100 ppm $NaN_3$ + TFA (pH 3.5)
  * Injection: 100 μL
  * Flow rate: 0.3 mL/min
  * Detection:

    (i) Detector light scattering (MALLS): Absolute molar mass
    (ii) Refractometry (RI): Concentration

The viscosity is measured using a Brookfield viscometer, at 25°C with a Brookfield module chosen from: LV1 speed 12 rpm, LV2 speed 12 rpm, LV4 speed 6 or 12 rpm. The Brookfield module chosen depends on the viscosity of the measured solution. Those skilled in the art know and are accustomed to adjusting the module according to the viscosity of the solution to be measured, which is part of their general knowledge.

### Preparation of polymers 1 to 3 according to the invention (P1-P3 (INV))

### Polymer 1 (P1)

First sequence: prepolymer PP1

In a 1-liter reactor equipped with a mechanical stirrer, a thermometer, a cooler, and a nitrogen gas immersion tube, a first fraction F1 is introduced at the tank base comprising 530.4 g of water, 55.6 g of N-vinylformamide (99% by weight in water), 1.56 g of dimethylacrylamide and 0.330 g of sodium methallyl sulfonate. The pH is adjusted to between 6.2 and 6.8 with 1.96 g of phosphoric acid (75% by weight in water) and 2.48 g of sodium hydroxide (30% by weight in water). The medium is heated and maintained at a temperature between 78 and 82°C using a water bath. The addition of 2 g of V-50 (13% by weight in water) primes this tank base and initiates polymerization of the monomers (PO1) to form a first prepolymer PP1.

Second sequence: prepolymer PP2

When exothermy is complete, we start casting: an initiator (30.6 g V-50 at 3.0% wt in water) for 180 minutes, and simultaneously a second fraction F2, consisting of 75.9 g water, 111.2 g N-Vinylformamide (99% wt in water), 1.56 g dimethylacrylamide and 0.20 g sodium methallyl sulfonate, for 60 minutes. Once the fraction F2 has been cast, the prepolymer PP2 is allowed to age for 10 minutes (polymerization PO2 to form the PP2 prepolymer takes place during the casting of the fraction F2 and during aging).

Third sequence: Base polymer

We then begin casting a third fraction F3, composed of 76.9 g water, 55.6 g N-vinylformamide (99% by weight in water), 0.128 g sodium methallyl sulfonate, over 50 minutes. At the end of the addition of the fraction F3, the polymer is left to age for 120 minutes (polymerization PO3 to form the polymer takes place during the casting of the fraction F3 and during aging). Once the aging is complete, 10g of V-50 (39% by weight in water) are added.

Base polymer 1

The solution comprising the base polymer 1 obtained has a pH of 6.9, an active material of 23.2% by weight, a viscosity of 11,000 cps and a molecular weight obtained by GPC-Malls of 215,000 g/mol.

Hydrolysis of the base polymer 1 to obtain the polymer 1 **P1** according to the invention

In a 1 liter reactor equipped with a mechanical stirrer, a thermometer, a refrigerant, 250 g of base polymer 1 is introduced to carry out the hydrolysis. The polymer is heated to 80°C. 11.5 g of sodium bisulfite (35% by weight in water) and 50 g of water are added. After 45 minutes, 129.4 g of soda (30% by weight in water) are poured in 20 minutes. Hydrolysis time is 270 minutes. The polymer is cooled to 35°C. 73 g of hydrochloric acid (33% by weight in water) is added to adjust the pH to 7, the water-soluble polymer **P1** is then obtained. Hydrolysis rate of polymer **P1** is 100%. The solution obtained after hydrolysis of the base polymer 1 has an active material of 12.7% by weight, a viscosity of 190 cps. The water-soluble polymer **P1** has a molecular weight obtained by GPC-Malls of236,000 g/mol.

**Polymer 2 (P2)**

Polymer 2 is produced using a process similar to that described for polymer 1.

First sequence: Prepolymer PP1

The prepolymer PP1 is obtained from a process similar to that described for the polymer **P1** applied to a fraction F1 composed of 521.1 g of water, 28.15 g of dimethyldiallyl ammonium chloride (64% by weight in water), 49.6 g of N-vinylformamide (99% by weight in water), 1.47 g of dimethylacrylamide and 0.25 g of sodium methallyl sulfonate. The pH is adjusted to between 6.2 and 6.8 with 1.96g of phosphoric acid (75% by weight in water) and 2.48 g of sodium hydroxide (30% by weight in water). The medium is heated and maintained at a temperature between 78 and 82°C using a water bath. An addition of 2 g of V-50 (13% by weight in water) makes it possible to prime this tank base and initiate the polymerization of the monomers (PO1) to form a first prepolymer PP1.

Second sequence: Prepolymer PP2

The prepolymer PP2 is obtained from a process similar to that described for the polymer **P1** applied to a fraction F2. When the exothermy is complete, we begin to pour: an initiator (31.1g of V-50 at 3.0% by weight in water) for 180 minutes, and simultaneously a second fraction F2 in 60 minutes, F2 being composed of 75.5 g water, 99.3 g N-Vinylformamide (99% by weight in water), 9.4 g dimethyldiallyl ammonium chloride (64% by weight in water), 1.47 g dimethylacrylamide and 0.16 g sodium methallyl sulfonate.

Third sequence: Base polymer 2

The base polymer 2 is obtained from a process similar to that described for the polymer P1 applied to a fraction F3. Once the fraction F2 has been cast, the prepolymer PP2 is allowed to age for 10 minutes (Polymerization PO2 to form the prepolymer PP2 takes place during the casting of the fraction F2 and during aging). In 50 minutes, we then begin to cast a third fraction F3 composed of 75.5 g of water, 49.6 g N-vinylformamide (99% by weight in water), 0.048 g of sodium

methallyl sulfonate.

At the end of the addition of the fraction F3, the polymer is left to age for 120 minutes (polymerization PO3 to form the polymer takes place during the casting of the fraction F3 and during aging). Once the aging is complete, 10g of V-50 (39% by weight in water) are added.

Base polymer 2

The solution comprising the base polymer 2 obtained has a pH of 6.6, an active material of 23.2% by weight, a viscosity of 3,000 cps and a molecular weight obtained by GPC-Malls of 205,000 g/mol.

Hydrolysis of the base polymer 2 to obtain the polymer 2 **P2** according to the invention

The hydrolysis of the base polymer 2 is carried out according to a protocol similar to that of the base polymer 1. The rate of hydrolysis of the polymer **P2** is 100%. The base polymer 2 is heated to 80°C. 11.5 g of sodium bisulfite (35% by weight in water) and 23.5 g of water are added. After 45 minutes, 147.5 g of soda (25% by weight in water) are cast in 20 minutes. Hydrolysis time is 270 minutes. The polymer is cooled to 35°C. 66.4 g of hydrochloric acid (33% by weight in water) is added to adjust the pH to 7, the water-soluble polymer 2 **P2** is then obtained. Hydrolysis rate of polymer **P2** is 100%.

The solution obtained after hydrolysis of the base polymer 2 has a pH of 7, an active material of 12.7% by weight, a viscosity of 100 cps. The water-soluble polymer **P2** has a molecular weight obtained by GPC-Malls of 225,000 g/mol.

**Polymer 3 (P3)**

First Sequence: Prepolymer PP1

Prepolymer PP1 is obtained from a process similar to that described for the polymer **P1** applied to a fraction F1 composed of 431.3 g of water, 68.7 g of dimethyldiallyl ammonium chloride (64% by weight in water), 97.6 g of N-vinylformamide (99% by weight in water), 2.175 g of dimethylacrylamide and 0.12 g of sodium methallyl sulfonate. The pH is adjusted to between 6.2 and 6.8 with 1.96g of phosphoric acid (75% by weight in water) and 2.48 g of sodium hydroxide (30% by weight in water). The medium is heated and maintained at a temperature between 78 and 82°C using a water bath. An addition of 10.9 g of V-50 (13% by weight in water) makes it possible to prime this tank base and initiate the polymerization of the monomers (PO1) to form a first prepolymer PP1.

Second sequence: Prepolymer PP2

The prepolymer PP2 is obtained from a process similar to that described for the polymer **P1** applied to a fraction F2. When the exothermy is complete, we begin to cast: an initiator (58.6g of V-50 at 2.7% by weight in water) for 180 minutes, and simultaneously a second fraction F2 in 60 minutes, composed of 106.9 g water, 19.8 g N-vinylformamide (99% by weight in water), 29.44 g dimethyldiallyl ammonium chloride (64% by weight in water), 1.45 g dimethylacrylamide and 0.18 g sodium methallyl sulfonate.

Third sequence: Base polymer 3

Base polymer 3 is obtained using a method similar to that described for polymer **P1** applied to a fraction F3. Once the fraction F2 has been cast, the prepolymer PP2 is allowed to age for 10 minutes (Polymerization PO2 to form the prepolymer PP2 takes place during the casting of the fraction F2 and during aging). In 50 minutes, we then begin to cast a third fraction F3 composed of 99.8 g of water, 62.9 g N-vinylformamide (99% by weight in water), 0.18 g of sodium methallyl sulfonate. At the end of the addition of the fraction F3, the polymer is left to age for 120 minutes (polymerization PO3 to form the polymer takes place during the casting of the fraction F3 and during aging). Once the aging is complete, 10g of water are added as well as 0.1g of V-50.

Base polymer 3

The solution comprising the base polymer 3 obtained has a pH of 6.6, an active material of 24.2% by weight, a viscosity of 3,000 cps and a molecular weight obtained by GPC-Malls of 279,000 g/mol.

Hydrolysis of the base polymer 3 to obtain the polymer 3 **P3** according to the invention

The hydrolysis of the base polymer 3 is carried out according to a protocol similar to that of the base polymer 1.
The solution obtained after hydrolysis of the base polymer 3 has a pH of 7, an active material of 16% by weight, a viscosity of 310 cps and a molecular weight obtained by GPC-Malls of 299,000 g/mol. The hydrolysis rate of the polymer **P3** is 100%.

**Preparation of comparative_polymers 4 to 6 (CE1 to CE3)**

**Polymer 4 (CE1)**

It is a commercial PVAm Xelorex RS 1300 polymer with a hydrolysis rate of 100%.

**Polymer 5 (CE2)**

Preparation of a base polymer 5 in one sequence

In a 1 liter reactor equipped with a mechanical stirrer, a thermometer, a refrigerant and a dipping rod of nitrogen gas, 238 g are introduced at the bottom of the tank of water, 90 g of dimethyldiallyl ammonium chloride (64% by weight in water). The pH is adjusted between 6.2 and 6.8 with 1.96 g of phosphoric acid (75% by weight in water) and 2.48 g of sodium hydroxide (30% by weight in water). The medium is heated and maintained at a temperature of 75°C using a water bath. We begin to cast: 80.2 g of V-50 (2.9% by weight in water) for 240 minutes, and simultaneously a fraction composed of 169 g of N-vinylformamide (99% by weight in water), in 120 minutes. At the end of the addition of the initiator, the polymer is left to age for 120 minutes.
The resulting base polymer 5 has a pH of 6.4, an active ingredient content of 22.6% by weight, a viscosity of 25,000 cps and a molecular weight obtained by GPC-Malls of 250,000g/mol.

Hydrolysis of base polymer 5 to obtain comparative polymer 5 (**CE2**).

The hydrolysis of base polymer 5 is carried out according to a protocol similar to that for polymer base 1. The hydrolysis rate of polymer 5 is 100%.
In a 1 liter reactor equipped with a mechanical stirrer, a thermometer, a refrigerant, 250g of base polymer 5 is introduced to carry out the hydrolysis. The polymer is heated to 80°C. 7.26 g of sodium bisulfite (35% by weight in water) are added. After 45 minutes, 96 g of soda (25% by weight in water) are cast in 20 minutes. Hydrolysis time is 270 minutes. The polymer is cooled to 35°C. 42g of hydrochloric acid (33% by weight in water) is added to adjust the pH to 7.
The resulting polymer **CE2** has a pH of 7, an active ingredient content of 15.6% by weight, a viscosity of 1120 cps and a molecular weight obtained by GPC-Malls of 270,000g/mol.

**Polymer 6 (CE3)**

Polymer **CE3** is prepared according to a protocol similar to that of polymer **P1**, with the difference that there is no casting of fraction F3, the compositions of castings F1 and F2 are adjusted according to the values summarized in Table 1. The hydrolysis rate of the polymer **P6** is 100%.

**IPN polymer P8 (CE4)**

Polymers of the invention are compared to an IPN (polymer IPN P8).
IPN polymer P8 is synthesized in 3 sequences.
Contrary to the process of the invention, the first sequence corresponds to the synthesis of a polymer P8a instead of a prepolymer (PP1). Then monomers are polymerized in 2 sequences in the presence of polymer P8a (steps c) to e) of the polymerization process of the invention) to afford a base polymer P8b.

First sequence: Preparation of polymer **P8a**

In a 1-liter reactor equipped with a mechanical stirrer, a thermometer, a cooler and a nitrogen gas immersion tube, a polymer **P8a** is obtained by polymerizing 55.6 g N-vinylformamide (99% by weight in water), 1.56 g dimethylacrylamide and 0.330 g sodium methallyl sulfonate in 530.4 g water. Once the reaction is complete, a solution is obtained, comprising a polymer **P8a,** with an active ingredient of 8.5% by weight, a viscosity of 240 cps, and a molecular weight obtained by GPC-Malls of 105,000 Da.

Second sequence: Synthesis of a prepolymer (PP2) in presence of the polymer P8a

Once the polymer P8a has been obtained, we begin casting: an initiator (30.6 g V-50 at 3.0% by weight in water) for 180 minutes, and simultaneously a fraction F2 composed of 75.9 g water, 111.2 g N-vinylformamide (99% by weight in water), 1.56 g dimethylacrylamide and 0.20 g sodium methallyl sulfonate, over 60 minutes. Once the fraction F2 has been cast, the prepolymer is left to age for 10 minutes.

Third sequence: Synthesis of a base polymer P8b (IPN) from PP2

We then begin casting fraction F3, made up of 76.9 g water, 55.6 g N-vinylformamide (99% by weight in water), 0.128 g sodium methallyl sulfonate, over 50 minutes. Once the fraction F3 has been added, the polymer P8b is left to age for 120 minutes. Once aging is complete, 10g of V-50 (39% by weight in water) is added.

Base polymer P8b (IPN)

The base polymer solution obtained has a pH of 6.8, an active ingredient of 23.2% by weight, a viscosity of 17,500 cps and a molecular weight obtained by GPC-Malls of 195,000 g/mol.

At this stage, the base polymer P8b is a complex of polymers (IPN).

Hydrolysis of the base polymer P8b to obtain IPN polymer P8 (**CE4**)

In a 1-liter reactor equipped with mechanical stirrer, thermometer and cooler, 250 g of polymer base is introduced for hydrolysis. The base polymer is heated to 80°C. 11.5 g sodium bisulfite (35% by weight in water) and 50 g water are added. After 45 minutes, 129.4 g of sodium hydroxide (30% by weight in water) are poured in over 20 minutes. Hydrolysis time is 270 minutes. The polymer is cooled to 35°C. 73 g hydrochloric acid (33% by weight in water) is added to adjust the pH to 7, giving the water-soluble polymer **CE4.** The hydrolysis rate of polymer **CE4** is 100%.

The solution obtained after hydrolysis of the base polymer has an active ingredient content of 12.7% by weight and a viscosity of 390 cps. The water-soluble polymer **P8** (**CE4**) has a molecular weight obtained by GPC-Malls of 216,000 g/mol.

The compositions of the different fractions of the process for preparing polymers 1 to 8 are summarized in Table 1.

In Table 1, the monomer content represents the mass percentage of monomer NVF or monomer DADMAC relative to the total weight of the corresponding monomer (that is monomer NVF or DADMAC) in the three fractions F1, F2 and F3.

Thus, the sum of the weight percentages of monomer NVF or monomer DADMAC in the three fractions equals to 100%.

The contents of compounds I (SMS) and II (DMAM) are expressed in ppm by weight relative to the total weight of monomer(s) in the three fractions.

Table 1: Compositions of the fractions of the polymerization process to obtain polymers **P1** to **P3** and **CE1** to **CE4.**

| Polymer | Quantity of the F1 compounds (by weight relative to the total weight of the monomer between fractions F1+F2+F3) | Quantity of the F2 compounds (by weight relative to the total weight of the monomer between fractions F1+F2+F3) | Quantity of the F3 compounds (by weight relative to the total weight of the monomer between fractions F1+F2+F3) |
|---|---|---|---|
| **P1** | NVF: 25 %<br>DMAM: 7085 ppm<br>SMS: 1499 ppm | NVF: 50 %<br>DMAM: 7085 ppm<br>SMS: 908 ppm | NVF: 25 %<br>SMS: 581 ppm |
| **P2** | NVF: 25 %<br>DADMAC: 75 %<br>DMAM: 7480 ppm<br>SMS: 1272 ppm | NVF: 50 %<br>DADMAC: 25 %<br>DMAM: 7480 ppm<br>SMS: 814 ppm | NVF: 25 %<br>SMS: 244 ppm |

(continued)

| Polymer | Quantity of the F1 compounds (by weight relative to the total weight of the monomer between fractions F1+F2+F3) | Quantity of the F2 compounds (by weight relative to the total weight of the monomer between fractions F1+F2+F3) | Quantity of the F3 compounds (by weight relative to the total weight of the monomer between fractions F1+F2+F3) | |
|---|---|---|---|---|
| **P3** | NVF: 54 %<br>DADMAC: 70 %<br>DMAM: 12187 ppm<br>SMS: 672 ppm | NVF: 11 %<br>DADMAC: 30%<br>DMAM: 8124 ppm<br>SMS: 1008 ppm | NVF: 35 %<br>SMS: 1008 ppm | |
| **CE1** | - | NVF: 100 % | - | |
| **CE2** | DADMAC: 100 % | | NVF: 100 % | - |
| **CE3** | NVF: 50 %<br>DMAM: 7085 ppm<br>SMS: 1499 ppm | | NVF: 50 %<br>DMAM: 7085 ppm<br>SMS: 1489 ppm | - |
| **CE4 (P8)** | P8a | NVF: 25 %<br>DMAM: 7085 ppm<br>SMS: 1499 ppm | NVF: 50 %<br>DMAM: 7085 ppm<br>SMS: 908 ppm | NVF: 25 %<br>SMS: 581 ppm |

The physicochemical properties of the polymers obtained are described in Table 2 below.

Table 2: Physicochemical properties of polymers **P1** to **P3** according to the invention and comparative polymers **CE1** to **CE4.**

| Polymer | Molar ratio of the monomer(s) in the polymer before hydrolysis | Viscosity before hydrolysis (cps) | Molecular weight (g/mol) before hydrolysis | Viscosity after hydrolysis (cps) | Molecular weight (g/mol) after hydrolysis |
|---|---|---|---|---|---|
| **P1** | NVF (100) | 11,000 | 215,000 | 190 | 236,000 |
| **P2** | NVF/DADMAC (95/5) | 3,000 | 205,000 | 100 | 225,000 |
| **P3** | NVF/DADMAC (87/13) | 3,000 | 279,000 | 310 | 299,000 |
| **CE1** | NVF (100) | 55,500 | 330,000 | 1200 | 340,000 |
| **CE2** | NVF/DADMAC (87/13) | 25,000 | 250,000 | 1120 | 270,000 |
| **CE3** | NVF (100) | 41,000 | 240,000 | 1050 | 260,000 |
| **CE4 (P8)** | NVF (100) | 17,500 | 195,000 | 390 | 216,000 |

These results demonstrate the differences and advantages of the invention. In particular, for similar molecular weights, lower viscosities are obtained for the polymer solutions according to the invention compared to comparative polymer solution.

## Application Testing

The wet paste used in all the application examples is obtained by disintegration of dry paste in order to obtain a final aqueous concentration of 1% by weight. It is a pH-neutral paste made from 100% recycled cardboard fibers.

## Vacuum dewatering performance assessment (DDA)

The DDA (Dynamic Drainage Analyzer) makes it possible to automatically determine the time (in seconds) necessary to drain a fibrous suspension on a fabric under vacuum. The polymers are added to the wet paste (0.6 liters of

paste at 1.0% by weight) in the DDA cylinder with stirring at 1000 revolutions per minute:

T= 0s: place the paste under stirring
T= 10s: add the polymer(s)
T= 30s: stop stirring and dewatering under vacuum at 200 mBar for 60 s.

The pressure under the fabric is recorded as a function of time. When all the water has been drained from the fibrous mat, the air passes through it causing a break in slope to appear on the curve representing the pressure under the fabric as a function of time. The time, expressed in seconds, recorded at this break in slope corresponds to the dewatering time. The lower the time, the better the vacuum dewatering.

**Performance in application dry resistance, weight at 80g.m$^{-2}$**

The necessary amount of paste is taken so as to ultimately obtain a sheet with a weight of 80 g.m$^{-2}$.
The wet paste is introduced into the vat of the dynamic former and is kept stirring. The different components of the system are injected into this paste according to the predefined sequence. A contact time of 30 to 45 seconds is generally respected between each addition of polymer.
Paper shapes are made with an automatic dynamic shaper: a blotter and the forming fabric are placed in the bowl of the dynamic shaper before starting the rotation of the bowl at 1000 rpm$^{-1}$ and building the water wall. The treated paste is spread over the water wall to form the fibrous mat on the forming fabric.
Once the water is drained, the fibrous mattress is recovered, pressed under a press delivering 4 bars, then dried at 117°C. The sheet obtained is conditioned overnight in a room with controlled humidity and temperature (50% relative humidity and 23°C). The dry strength properties of all sheets obtained by this procedure are then measured.
The bursting is measured with a Messmer Buchel M 405 burstometer according to the TAPPI T403 om-02 standard. The results are expressed in Table 3 as a percentage improvement compared to a blank.
The breaking length in the dry state is measured in the machine direction with a Testometric AX tensile device according to the TAPPI T494 om-01 standard. The results are expressed in Table 3 as a percentage improvement compared to a blank.
The amount of polymer added is expressed in kg of active polymer per ton of dry fiber. Tests at 1.5 kg/t were carried out and summarized in table 3.

Table 3: Dewatering and dry resistance results of polymers **P1** to **P3** according to the invention and comparative polymers **CE1** to **CE4.**

| | Burst percentage increase (%) | DBL percentage increase (%) | DDA percentage increase (%) |
|---|---|---|---|
| Blank | 0 | 0 | 0 |
| **P1** (1,5kg/t) | 32 | 19 | 61 |
| **P2** (1,5 kg/t) | 29 | 21 | 56 |
| **P3** (1,5 kg/t) | 28 | 22 | 55 |
| **CE1** (1,5 kg/t) | 26 | 15 | 53 |
| **CE2** (1,5 kg/t) | 25 | 14 | 49 |
| **CE3** (1,5 kg/t) | 24 | 15 | 52 |
| **CE4 (P8)** (1,5 kg/t) | 26 | 15 | 51 |

The polymers of this invention have excellent drainage performance (DDA) and mechanical characteristics (Burst: bursting; DBL: dry rupture) compared to polymers obtained from a single fraction or 2 fractions, while having a lower viscosity, thus allowing ease of use and a reduction in environmental impact during their use.

## Claims

**1.** A water-soluble polymer comprising:

- at least one monomer A obtained by partial or total hydrolysis of the -N($R^2$)-CO-$R^1$ group of a formula (AP)

monomer:

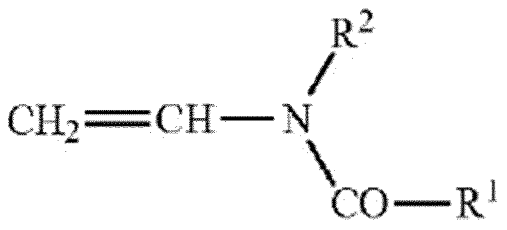

(AP)

where $R^1$ and $R^2$ are, independently, a hydrogen atom or an alkyl chain of 1 to 6 carbons,
- at least one structuring system comprising:

(i) at least one compound I chosen from: allylsulfonic acid, methallylsulfonic acid, allyl disulfonic acid, methallyl disulfonic acid, their salts, and mixtures thereof;
(ii) at least one compound II of formula (II):

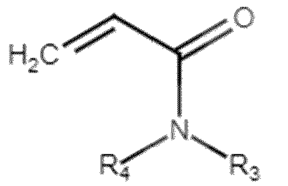

(II)

$R_3$ and $R_4$ being, independently of one another, a hydrogen atom, a methyl group, an ethyl group, an isopropyl group or a $CH_2$-OH group;
$R_3$ and $R_4$ not both being a hydrogen atom ($R_3 \neq H$ when $R_4=H$; $R_4 \neq H$ when $R_3=H$),

- optionally at least one hydrophilic cationic monomer B distinct from monomer A;
- optionally at least one monomer C chosen from hydrophilic anionic monomers distinct from compound I, hydrophilic nonionic monomers distinct from the monomer of formula AP and compound II, hydrophilic zwitterionic monomers and hydrophobic monomers;

said polymer being free of anionic monomer other than compound I;
said water-soluble polymer being obtained according to the following steps:

a) formation of a solution (S1) comprising at least a first fraction (F1) containing (1) at least one monomer of formula (AP) and/or at least one of optional monomers B and C and (2) at least one compound chosen from compounds I and II;
b) polymerization 1 (PO 1) of fraction F1 to form a solution of a first prepolymer (PP1);
c) addition, to the solution comprising PP1, of a second fraction (F2) containing (1) at least one monomer of formula (AP) and/or at least one of the optional monomers B and C and (2) at least one compound chosen from compounds I and II;
d) polymerization 2 (PO2) of fraction F2 on PP1 to form a second prepolymer (PP2);
e) addition, to the solution comprising PP2, of a third fraction (F3) containing (1) at least one monomer of formula (AP) and/or at least one of the optional monomers B and C and (2) at least one compound chosen from compounds I and II;
f) polymerization 3 (PO3) of fraction F3 on PP2 to form a solution comprising a base polymer;
g) partial or total hydrolysis of the -N($R^2$)-CO-$R^1$ group of the monomer of formula (AP) of the base polymer in order to obtain the water-soluble polymer;

at least one of the fractions F1, F2 or F3 contains at least one monomer of formula (AP), at least one of the fractions F1, F2 or F3 contains at least one compound I and at least one of the fractions F1, F2 or F3 contains at least one compound II.

2. The water-soluble polymer according to claim 1, ***characterized* in that** the monomer or monomers of formula (AP) may be selected from N-vinylformamide, N-vinyl-N-methylformamide, N-vinylacetamide, N-vinyl-N-methylacetamide, N-vinyl-N-ethylacetamide, N-vinylpropianamide, N-vinyl-N-methylpropianamide and N-vinylbutyramide. Preferably, N-vinylformamide is used.

3. The water-soluble polymer according to any one of the preceding claims, ***characterized* in that** it comprises between 500 and 50,000 ppm of compound I, relative to the total weight of the monomer(s) of formula (AP) (+ optionally monomers B and C).

4. The water-soluble polymer according to any one of the preceding claims, ***characterized* in that** it comprises between 500 and 50,000 ppm of compound II, relative to the total weight of the monomer(s) of formula (AP) (+ optionally monomers B and C).

5. The water-soluble polymer according to any one of the preceding claims, ***characterized* in that** compound II is chosen from: N,N-dimethylacrylamide, N,N-diethylacrylamide, N,N-isopropylacrylamide, N-methylolacrylamide, and mixtures thereof.

6. The water-soluble polymer according to any one of the preceding claims, ***characterized* in that** the mass ratio between compound I and compound II is between 0.01 and 100.

7. Method for the sequential preparation of a water-soluble polymer, comprising the following steps:

a) formation of a solution (S1) comprising at least a first fraction (F1) containing (1) at least one monomer of formula (AP) and/or at least one of optional monomers B and C and (2) at least one compound chosen from compounds I and II;
wherein formula (AP) is

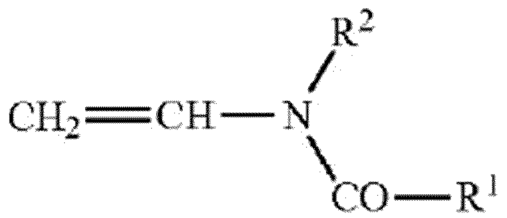

(AP)

where $R^1$ and $R^2$ are, independently, a hydrogen atom or an alkyl chain of 1 to 6 carbons, wherein compound I is chosen from: allylsulfonic acid, methallylsulfonic acid, allyl disulfonic acid, methallyl disulfonic acid, their salts, and mixtures thereof;
wherein compound II of formula (II) is:

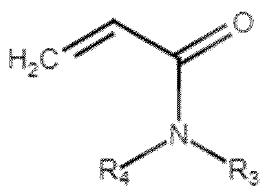

(II)

$R_3$ and $R_4$ being, independently of one another, a hydrogen atom, a methyl group, an ethyl group, an isopropyl group or a $CH_2$-OH group;
$R_3$ and $R_4$ not both being a hydrogen atom ($R_3 \neq H$ when $R_4=H$; $R_4 \neq H$ when $R_3=H$),

b) polymerization 1 (PO1) of fraction F1 to form a solution of a first prepolymer (PP1);
c) addition, to the solution comprising PP1, of a second fraction (F2) containing (1) at least one monomer of formula (AP) and/or at least one of the optional monomers B and C and (2) at least one compound chosen from compounds I and II;

d) polymerization 2 (PO2) of fraction F2 on PP1 to form a second prepolymer (PP2);
e) addition, to the solution comprising PP2, of a third fraction (F3) containing (1) at least one monomer of formula (AP) and/or at least one of the optional monomers B and C and (2) at least one compound chosen from compounds I and II;
f) polymerization 3 (PO3) of fraction F3 on PP2 to form a solution comprising a base polymer;
g) partial or total hydrolysis of the amide group -N($R^2$)-CO-$R^1$ of the monomer of formula (AP) of the base polymer in order to obtain the water-soluble polymer;

at least one of the fractions F1, F2 or F3 contains at least one monomer of formula (AP), at least one of the fractions F1, F2 or F3 contains at least one compound I and at least one of the fractions F1, F2 or F3 contains at least one compound II.

**8.** The method according to claim 7, ***characterized*** **in that** an initiator is added continuously throughout the polymerization method.

**9.** The method according to claim 7 or 8, ***characterized*** **in that**, after step f) of polymerization (PO3) and prior to step g), the process comprises an aging step of 10 minutes to 100 minutes.

**10.** The method according to any one of Claims 7 to 9, ***characterized*** **in that** the hydrolysis is a basic hydrolysis.

**11.** The method according to any one of claims 7 to 10, ***characterized*** **in that** between 1 and 100 mol% of monomer of formula (AP) are hydrolyzed.

**12.** The method for manufacturing paper or cardboard comprising the addition of a water-soluble polymer according to any one of claims 1 to 6, in an aqueous suspension of fibers and the formation of a sheet of paper or cardboard.

**13.** A use of water-soluble polymer according to any one of claims 1 to 6, in the recovery of hydrocarbons; in the drilling or cementing of wells; in the stimulation of hydrocarbon wells; in water treatment in open, closed or semi-closed circuit; in the treatment of fermentation musts; in sludge treatment; in the construction; in wood processing; in the treatment of hydraulic composition; in the mining industry; in the formulation of cosmetic products; in the formulation of detergents; in textile manufacturing; in geothermal energy; in the manufacture of sanitary liners; or in agriculture.

**14.** Use of the water-soluble polymer according to any one of claims 1 to 6, as a flocculant, coagulant, binding agent, fixing agent, viscosity reducing agent, thickening agent, absorbent agent, friction reducing agent, dewatering agent, water retention agent. filler, dehydrating agent, conditioning agent, stabilizing agent, fixing agent, film-forming agent, sizing agent, superplasticizing agent, clay inhibitor, or dispersant.

## Patentansprüche

**1.** Ein wasserlösliches Polymer, das Folgendes umfasst:

- mindestens ein Monomer A, das durch teilweise oder vollständige Hydrolyse der Gruppe -N($R^2$)-CO-$R^1$ eines Monomers mit folgender Formel (AP) erhalten wird:

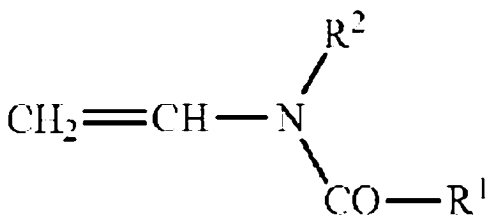

(AP)

wobei $R^1$ und $R^2$ unabhängig voneinander ein Wasserstoffatom oder eine Alkylkette mit 1 bis 6 Kohlenstoffen sind,
- mindestens ein strukturierendes System, das Folgendes umfasst:

(i) mindestens eine Verbindung I, ausgewählt aus: Allylsulfonsäure, Methallylsulfonsäure, Allyldisulfonsäure, Methallyldisulfonsäure, deren Salze und Gemische;
(ii) mindestens eine Verbindung II der Formel (II):

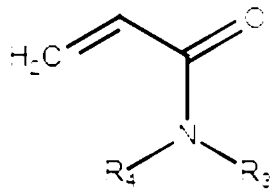

(II)

wobei $R_3$ und $R_4$ unabhängig voneinander ein Wasserstoffatom, eine Methylgruppe, eine Ethylgruppe, eine Isopropylgruppe oder eine $CH_2$-OH-Gruppe sind;
$R_3$ und $R_4$ nicht beide ein Wasserstoffatom sind ($R_3 \neq H$, wenn $R_4$=H; $R_4 \neq H$, wenn $R_3$=H),

- optional mindestens ein hydrophiles kationisches Monomer B ist, das sich vom Monomer A unterscheidet;
- optional mindestens ein Monomer C, das unter den hydrophilen anionischen Monomeren, die sich von der Verbindung I unterscheidet, den hydrophilen nichtionischen Monomeren, die sich von dem Monomer der Formel AP und der Verbindung II unterscheiden, den hydrophilen zwitterionischen Monomeren und den hydrophoben Monomeren ausgewählt ist;

wobei das Polymer frei von anderen anionischen Monomeren als der Verbindung I ist;
wobei das wasserlösliche Polymer gemäß den folgenden Schritten erhalten wird:

a) Bildung einer Lösung (S1), die mindestens eine erste Fraktion (F1) umfasst, die (1) mindestens ein Monomer der Formel (AP) und/oder mindestens eines der optionalen Monomere B und C und (2) mindestens eine unter den Verbindungen I und II ausgewählte Verbindung enthält;
b) Polymerisation 1 (PO1) der Fraktion F1 zur Bildung einer Lösung eines ersten Präpolymers (PP1);
c) Zugabe einer zweiten Fraktion (F2), die (1) mindestens ein Monomer der Formel (AP) und/oder mindestens eines der optionalen Monomere B und C und (2) mindestens eine unter den Verbindungen I und II ausgewählte Verbindung enthält, zu der PP1 enthaltenden Lösung;
d) Polymerisation 2 (PO2) der Fraktion F2 von PP1, um ein zweites Präpolymer (PP2) zu bilden;
e) Zugabe einer dritten Fraktion (F3), die (1) mindestens ein Monomer der Formel (AP) und/oder mindestens eines der optionalen Monomere B und C und (2) mindestens eine Verbindung enthält, die aus den Verbindungen I und II ausgewählt ist, zu der PP2 enthaltenden Lösung;
f) Polymerisation 3 (PO3) der Fraktion F3 von PP2 zur Bildung einer Lösung, die ein Basispolymer enthält;
g) teilweise oder vollständige Hydrolyse der Gruppe -N($R^2$)-CO-$R^1$ des Monomers der Formel (AP) des Basispolymers, um das wasserlösliche Polymer zu erhalten;

wobei mindestens eine der Fraktionen F1, F2 oder F3 mindestens ein Monomer der Formel (AP) enthält, mindestens eine der Fraktionen F1, F2 oder F3 mindestens eine Verbindung I enthält und mindestens eine der Fraktionen F1, F2 oder F3 mindestens eine Verbindung II enthält.

2. Wasserlösliches Polymer nach Anspruch 1, **dadurch *gekennzeichnet,* dass** das Monomer oder die Monomere der Formel (AP) aus N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid ausgewählt werden können. Vorzugsweise wird N-Vinylformamid verwendet.

3. Wasserlösliches Polymer nach einem der vorhergehenden Ansprüche, **dadurch *gekennzeichnet,* dass** es zwischen 500 und 50.000 ppm der Verbindung I, bezogen auf das Gesamtgewicht des oder der Monomere der Formel (AP) (+ optional Monomere B und C), enthält.

4. Wasserlösliches Polymer nach einem der vorhergehenden Ansprüche, **dadurch *gekennzeichnet,* dass** es zwischen 500 und 50.000 ppm der Verbindung II, bezogen auf das Gesamtgewicht des Monomers/der Monomere der Formel (AP) (+ optional Monomere B und C), enthält.

5. Wasserlösliches Polymer nach einem der vorhergehenden Ansprüche, **dadurch *gekennzeichnet,* dass** die Verbindung II ausgewählt ist aus: N,N-Dimethylacrylamid, N,N-Diethylacrylamid, N,N-Isopropylacrylamid, N-Methylolacrylamid und deren Gemischen.

6. Wasserlösliches Polymer nach einem der vorhergehenden Ansprüche, **dadurch *gekennzeichnet,* dass** das Massenverhältnis zwischen Verbindung I und Verbindung II zwischen 0,01 und 100 liegt.

7. Verfahren zur sequentiellen Herstellung eines wasserlöslichen Polymers, das folgende Schritte umfasst:

a) Bildung einer Lösung (S1), die mindestens eine erste Fraktion (F1) umfasst, die (1) mindestens ein Monomer der Formel (AP) und/oder mindestens eines der optionalen Monomere B und C und (2) mindestens eine unter den Verbindungen I und II ausgewählte Verbindung enthält;
wobei die Formel (AP) ist:

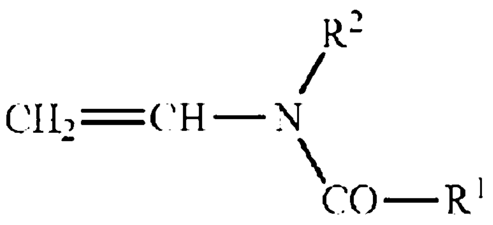

(AP)

wobei $R^1$ und $R^2$ unabhängig voneinander ein Wasserstoffatom oder eine Alkylkette mit 1 bis 6 Kohlenstoffen sind,
wobei die Verbindung I ausgewählt ist aus: Allylsulfonsäure, Methallylsulfonsäure, Allyldisulfonsäure, Methallyldisulfonsäure, deren Salze und Gemische;
wobei die Verbindung II der Formel (II) ist:

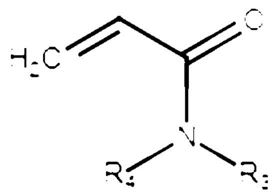

(II)

wobei $R_3$ und $R_4$ unabhängig voneinander ein Wasserstoffatom, eine Methylgruppe, eine Ethylgruppe, eine Isopropylgruppe oder eine $CH_2$-OH-Gruppe sind;
$R_3$ und $R_4$ nicht beide ein Wasserstoffatom sind ($R_3 \neq H$, wenn $R_4=H$; $R_4 \neq H$, wenn $R_3=H$),

b) Polymerisation 1 (PO1) der Fraktion F1 zur Bildung einer Lösung eines ersten Präpolymers (PP1);
c) Zugabe einer zweiten Fraktion (F2), die (1) mindestens ein Monomer der Formel (AP) und/oder mindestens eines der optionalen Monomere B und C und (2) mindestens eine unter den Verbindungen I und II ausgewählte Verbindung enthält, zu der PP1 enthaltenden Lösung;
d) Polymerisation 2 (PO2) der Fraktion F2 von PP1, um ein zweites Präpolymer (PP2) zu bilden;
e) Zugabe einer dritten Fraktion (F3), die (1) mindestens ein Monomer der Formel (AP) und/oder mindestens eines der optionalen Monomere B und C und (2) mindestens eine unter den Verbindungen I und II ausgewählte Verbindung enthält, zu der PP2 enthaltenden Lösung;
f) Polymerisation 3 (PO3) der Fraktion F3 von PP2 zur Bildung einer Lösung, die ein Basispolymer enthält;
g) teilweise oder vollständige Hydrolyse der Amidgruppe -N($R^2$)-CO-$R^1$ des Monomers der Formel (AP) des Basispolymers, um das wasserlösliche Polymer zu erhalten;

wobei mindestens eine der Fraktionen F1, F2 oder F3 mindestens ein Monomer der Formel (AP) enthält, mindestens eine der Fraktionen F1, F2 oder F3 mindestens eine Verbindung I enthält und mindestens eine der Fraktionen F1, F2 oder F3 mindestens eine Verbindung II enthält.

8. Verfahren nach Anspruch 7, **dadurch *gekennzeichnet,* dass** ein Initiator während des gesamten Polymerisationsverfahrens kontinuierlich zugegeben wird.

9. Verfahren nach Anspruch 7 oder 8, **dadurch *gekennzeichnet,* dass** das Verfahren nach dem Schritt f) der Polymerisation (PO3) und vor dem Schritt g) einen Alterungsschritt von 10 Minuten bis 100 Minuten umfasst.

10. Verfahren nach einem der Ansprüche 7 bis 9, **dadurch *gekennzeichnet,* dass** die Hydrolyse eine alkalische Hydrolyse ist.

11. Verfahren nach einem der Ansprüche 7 bis 10, **dadurch *gekennzeichnet,* dass** zwischen 1 und 100 Mol-% des Monomers der Formel (AP) hydrolysiert werden.

12. Verfahren zur Herstellung von Papier oder Pappe, bei dem ein wasserlösliches Polymers nach einem der Ansprüche 1 bis 6 in eine wässrige Fasersuspension gegeben wird und ein Blatt Papier oder Pappe bildet.

13. Verwendung des wasserlöslichen Polymers nach einem der Ansprüche 1 bis 6 bei der Gewinnung von Kohlenwasserstoffen, beim Bohren oder Zementieren von Bohrlöchern, bei der Stimulierung von Kohlenwasserstoffbohrlöchern, bei der Wasseraufbereitung im offenen, geschlossenen oder halbgeschlossenen Kreislauf, bei der Aufbereitung von Fermentationsmosten und bei der Schlammbehandlung; im Baugewerbe, in der Holzverarbeitung, bei der Aufbereitung hydraulischer Zusammensetzungen, im Bergbau, bei der Formulierung von kosmetischen Produkten, bei der Formulierung von Waschmitteln, in der Textilherstellung, bei der geothermischen Energie, bei der Herstellung von Sanitärauskleidungen oder in der Landwirtschaft.

14. Verwendung des wasserlöslichen Polymers nach einem der Ansprüche 1 bis 6 als Flockungsmittel, Koagulierungsmittel, Bindemittel, Fixiermittel, Viskositätsreduktionsmittel, Verdickungsmittel, Absorptionsmittel, Reibungsreduktionsmittel, Entwässerungsmittel, Wasserrückhaltemittel, Füllstoff, Entwässerungsmittel, Konditionierungsmittel, Stabilisierungsmittel, Fixiermittel, Filmbildner, Leimungsmittel, Superplastifizierungsmittel, Toninhibitor oder Dispergiermittel.

**Revendications**

1. Polymère hydrosoluble comprenant :

- au moins un monomère A obtenue par hydrolyse partielle ou totale du groupement $-N(R^2)-CO-R^1$ d'un monomère de formule (AP) :

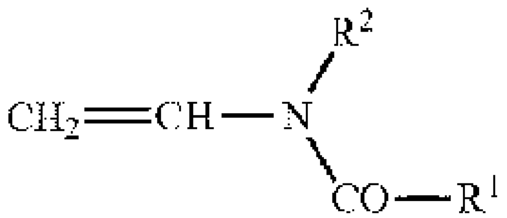

(AP)

où $R^1$ et $R^2$ sont, indépendamment, un atome d'hydrogène ou une chaine alkyle de 1 à 6 carbones,
- au moins un système de structuration comprenant :

(i) au moins un composé I choisi parmi : l'acide allylsulfonique, l'acide méthallylsulfonique, l'acide allyl disulfonique, l'acide methallyl disulfonique, leurs sels, et leurs mélanges ;
(ii) au moins un composé II de formule (II) :

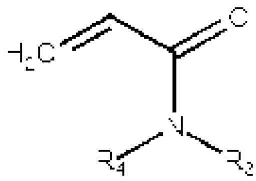

(II)

$R_3$ et $R_4$ étant, indépendamment l'un de l'autre, un atome d'hydrogène, un groupe méthyle, un groupe éthyle, un groupe isopropyle ou un groupe $CH_2$-OH ;
$R_3$ et $R_4$ n'étant pas tous deux un atome d'hydrogène ($R_3 \neq H$ lorsque $R_4=H$ ; $R_4 \neq H$ lorsque $R_3=H$),

- optionnellement au moins un monomère cationique hydrophile B distinct du monomère A ;
- optionnellement au moins un monomère C choisi parmi les monomères anioniques hydrophiles distincts du composé I, les monomères non ioniques hydrophiles distincts du monomère de formule AP et du composé II, les monomères zwittérioniques hydrophiles et les monomères hydrophobes ;

ledit polymère étant dépourvu de monomère anionique autre que le composé I ;
ledit polymère hydrosoluble étant obtenu selon les étapes suivantes :

a) formation d'une solution (S1) comprenant au moins une première fraction (F1) contenant (1) au moins un monomère de formule (AP) et/ou au moins un des monomères optionnels B et C et (2) au moins un composé choisi parmi les composés I et II ;
b) polymérisation 1 (PO1) de la fraction F1 pour former une solution d'un premier prépolymère (PP1) ;
c) ajout, à la solution comprenant PP1, d'une deuxième fraction (F2) contenant (1) au moins un monomère de formule (AP) et/ou au moins un des monomères optionnels B et C et (2) au moins un composé choisi parmi les composés I et II ;
d) polymérisation 2 (PO2) de la fraction F2 sur PP1 pour former un deuxième prépolymère (PP2) ;
e) ajout, à la solution comprenant PP2, d'une troisième fraction (F3) contenant (1) au moins un monomère de formule (AP) et/ou au moins un des monomères optionnels B et C et (2) au moins un composé choisi parmi les composés I et II ;
f) polymérisation 3 (PO3) de la fraction F3 sur PP2 pour former une solution comprenant un polymère base ;
g) hydrolyse partielle ou total du groupement -N($R^2$)-CO-$R^1$ du monomère de formule (AP) du polymère base afin d'obtenir le polymère hydrosoluble ;

au moins une des fractions F1, F2 ou F3 contient au moins un monomère de formule (AP), au moins une des fractions F1, F2 ou F3 contient au moins un composé I et au moins une des fractions F1, F2 ou F3 contient au moins un composé II.

2. Polymère hydrosoluble selon la revendication 1, ***caractérisé* en ce que** le ou les monomères de formule (AP) peuvent être choisis, notamment parmi la N-vinylformamide, la N-vinyl-N-méthylformamide, la N-vinylacétamide, la N-vinyl-N-méthylacétamide, la N-Vinyl-N-éthylacétamide, la N-vinyl-propianamide, la N-vinyl-N-methylpropianamide et la N-vinylbutyramide. Préférentiellement il s'agit de la N-vinylformamide.

3. Polymère hydrosoluble selon l'une des revendications précédentes, ***caractérisé* en ce qu'**il comprend entre 500 et 50 000 ppm de composé I, par rapport au poids total des monomères de formule (AP) (+ optionnellement monomères B et C).

4. Polymère hydrosoluble selon l'une des revendications précédentes, ***caractérisé* en ce qu'**il comprend entre 500 et 50 000 ppm de composé II, par rapport au poids total des monomères de formule (AP) (+ optionnellement monomères B et C).

5. Polymère hydrosoluble selon l'une des revendications précédentes, ***caractérisé* en ce que** le composé II est choisi parmi : le N,N-diméthylacrylamide, le N,N-diéthylacrylamide, le N,N-isopropylacrylamide, le N-méthylolacrylamide et leurs mélanges.

6. Polymère hydrosoluble selon l'une des revendications précédentes, ***caractérisé* en ce que** le ratio massique entre le composé I et le composé II est compris entre 0,01 et 100.

7. Procédé de préparation en séquence d'un polymère hydrosoluble, comprenant les étapes suivantes :

a) formation d'une solution (S1) comprenant au moins une première fraction (F1) contenant (1) au moins un monomère de formule (AP) et/ou au moins un des monomères optionnels B et C et (2) au moins un composé choisi parmi les composés I et II ;
où la formule (AP) est :

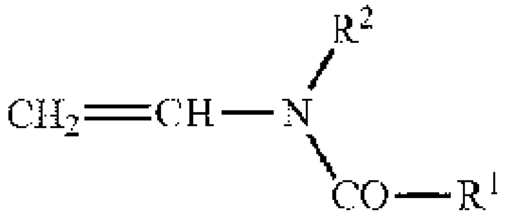

(AP)

où $R^1$ et $R^2$ sont, indépendamment, un atome d'hydrogène ou une chaine alkyle de 1 à 6 carbones,
où le composé I est choisi parmi : l'acide allylsulfonique, l'acide méthallylsulfonique, l'acide allyl disulfonique, l'acide methallyl disulfonique, leurs sels, et leurs mélanges ;
où le composé II de formule (II) est :

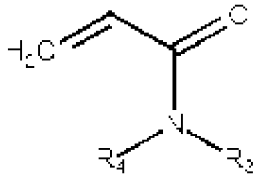

(II)

$R_3$ et $R_4$ étant, indépendamment l'un de l'autre, un atome d'hydrogène, un groupe méthyle, un groupe éthyle, un groupe isopropyle ou un groupe $CH_2$-OH ;
$R_3$ et $R_4$ n'étant pas tous deux un atome d'hydrogène ($R_3 \neq H$ lorsque $R_4$=H; $R_4 \neq H$ lorsque $R_3$=H),

b) polymérisation 1 (PO1) de la fraction F1 pour former une solution d'un premier prépolymère (PP1) ;
c) ajout, à la solution comprenant PP1, d'une deuxième fraction (F2) contenant (1) au moins un monomère de formule (AP) et/ou au moins un des monomères optionnels B et C et (2) au moins un composé choisi parmi les composés I et II ;
d) polymérisation 2 (PO2) de la fraction F2 sur PP1 pour former un deuxième prépolymère (PP2) ;
e) ajout, à la solution comprenant PP2, d'une troisième fraction (F3) contenant (1) au moins un monomère de formule (AP) et/ou au moins un des monomères optionnels B et C et (2) au moins un composé choisi parmi les composés I et II ;
f) polymérisation 3 (PO3) de la fraction F3 sur PP2 pour former une solution comprenant un polymère base ;
g) hydrolyse partielle ou total du groupement amide -N($R^2$)-CO-$R^1$ du monomère de formule (AP) du polymère base afin d'obtenir le polymère hydrosoluble ;

au moins une des fractions F1, F2 ou F3 contient au moins un monomère de formule (AP), au moins une des fractions F1, F2 ou F3 contient au moins un composé I et au moins une des fractions F1, F2 ou F3 contient au moins un composé II.

8. Procédé selon la revendication 7, ***caractérisé* en ce qu'**un amorceur est ajouté en continu tout au long du procédé de polymérisation.

9. Procédé selon la revendication 7 ou 8, ***caractérisé* en ce que**, après l'étape f) de polymérisation (PO3) et préalablement à l'étape g), le procédé comprend une étape de vieillissement de 10 minutes à 100 minutes.

**10.** Procédé selon l'une des revendications 7 à 9, ***caractérisé* en ce que**, l'hydrolyse est une hydrolyse basique.

**11.** Procédé selon l'une des revendications 7 à 10, ***caractérisé* en ce qu'**entre 1 et 100 mol% de monomère de formule (AP) sont hydrolysés.

**12.** Procédé de fabrication du papier ou de carton comprenant l'addition d'un polymère hydrosoluble selon l'une des revendications 1 à 6, dans une suspension aqueuse de fibres et la formation d'une feuille de papier ou de carton.

**13.** Utilisation du polymère hydrosoluble selon l'une des revendication 1 à 6, dans la récupération d'hydrocarbures ; dans le forage ou la cimentation de puits ; dans la stimulation de puits d'hydrocarbures ; dans le traitement de l'eau en circuit ouvert, fermé ou semi fermé ; dans le traitement des mouts de fermentation ; dans le traitement des boues ; dans la construction ; dans le traitement du bois ; dans le traitement de composition hydraulique ; dans l'industrie minière ; dans la formulation de produits cosmétiques ; dans la formulation de détergents ; dans la fabrication du textile ; dans la géothermie ; dans la fabrication de couche hygiénique ; ou dans l'agriculture.

**14.** Utilisation du polymère hydrosoluble selon l'une des revendication 1 à 6, comme floculant, coagulant, agent liant, agent fixateur, agent réducteur de viscosité, agent épaississant, agent absorbant, agent réducteur de friction, agent d'égouttage, agent de rétention de charge, agent de déshydratation, agent conditionneur, agent stabilisant, agent fixateur, agent filmogène, agent d'encollage, agent superplastifiant, inhibiteur d'argile ou dispersant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4421602 A
- EP 3722330 A
- US 2982749 A
- US 3278506 A
- US 3284393 A
- US 3957739 A
- US 3975341 A
- US 4078133 A
- US 4312969 A
- US 10759746 B


### Non-patent literature cited in the description


- **G.A.SMOOK**. Handbook for Pulp & Paper Technologists